# EUROPEAN PATENT APPLICATION

(11) **EP 4 407 732 A1**
(43) Date of publication of application: **31.07.2024**
(21) Application number: 22939246.9
(22) Date of filing: 29.04.2022
(51) Int. Cl.: H01M 10/0525, H01M 10/0569

(54) **SECONDARY BATTERY, BATTERY MODULE, BATTERY PACK AND ELECTRICAL DEVICE**

(71) Applicant: Contemporary Amperex Technology Co., Limited, Ningde, Fujian 352100 (CN)
(72) Inventor: ZHANG, Limei, Ningde, Fujian 352100 (CN); CHEN, Peipei, Ningde, Fujian 352100 (CN); LIU, Jiao, Ningde, Fujian 352100 (CN)
(74) Representative: Gong, Jinping
(86) International application number: PCT/CN2022/090396
(87) International publication number: WO 2023/206397

(57) **Abstract**

This application provides a secondary battery, a battery module, a battery pack, and an electric apparatus. The secondary battery includes a positive electrode plate and a non-aqueous electrolyte. The positive electrode plate includes a positive electrode active material. The positive electrode active material has a chemical formula of LiₐAₓMn_{1-y}B_{y}P_{1-z}C_{z}O₄₋ₙDₙ, where A includes at least one of Zn, Al, Na, K, Mg, Nb, Mo, and W, B includes at least one of Ti, V, Zr, Fe, Ni, Mg, Co, Ga, Sn, Sb, Nb, and Ge, C includes at least one ofB (boron), S, Si, and N, and D includes at least one of S, F, Cl, and Br. The non-aqueous electrolyte includes an organic solvent. The organic solvent includes a first solvent. The first solvent includes one or more of compounds represented by formula 1. Rate performance and cycling performance of the secondary battery are improved.

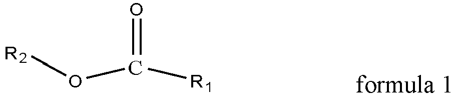

## Description

### TECHNICAL FIELD

This application relates to the field of battery technologies, and in particular, to a secondary battery, a battery module, a battery pack, and an electric apparatus.

### BACKGROUND

In recent years, with the development of lithium-ion secondary batteries, lithium-ion secondary batteries have been widely used in energy storage power supply systems such as hydroelectric, thermal, wind, and solar power plants, and many other fields including electric tools, electric bicycles, electric motorcycles, electric vehicles, military equipment, and aerospace. Along with the great development of lithium-ion secondary batteries, higher requirements are imposed on their energy density, cycling performance, safety performance, and the like.

Lithium manganese phosphate, as a positive electrode active material for lithium-ion secondary batteries, has the advantages of high capacity, high safety, and low cost. However, lithium manganese phosphate has poor rate performance, which has limited its commercial application.

### SUMMARY

This application provides a secondary battery, a battery module, a battery pack, and an electric apparatus, so as to solve the problem of poor rate performance of secondary batteries when lithium manganese phosphate is used as a positive electrode active material for lithium-ion secondary batteries.

A first aspect of this application provides a secondary battery. The secondary battery includes a positive electrode plate and a non-aqueous electrolyte, where the positive electrode plate includes a positive electrode active material, the positive electrode active material having a chemical formula of LiₐAₓMn_{1-y}B_{y}P_{1-z}C_{z}O₄₋ₙDₙ, where A includes one or more elements selected from a group consisting of Zn, Al, Na, K, Mg, Nb, Mo, and W, B includes one or more elements selected from a group consisting of Ti, V, Zr, Fe, Ni, Mg, Co, Ga, Sn, Sb, Nb, and Ge, C includes one or more elements selected from a group consisting of B (boron), S, Si, and N, D includes one or more elements selected from a group consisting of S, F, Cl, and Br, a is selected from a range of 0.9 to 1.1, x is selected from a range of 0.001 to 0.1, y is selected from a range of 0.001 to 0.5, z is selected from a range of 0.001 to 0.1, n is selected from a range of 0.001 to 0.1, and the positive electrode active material is electrically neutral.

The non-aqueous electrolyte includes an organic solvent, the organic solvent includes a first solvent, and the first solvent includes one or more of compounds represented by formula 1, 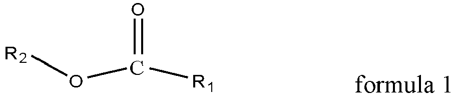 where R₁ and R₂ are each independently one of a C1-C10 alkyl group and a C1-C10 halogenated alkyl group, optionally, R₁ and R₂ are each independently one of a methyl group, an ethyl group, a propyl group, a butyl group, a pentyl group, a hexyl group, a fluoromethyl group, a fluoroethyl group, a fluoropropyl group, a fluorobutyl group, a fluoropentyl group, and a fluorohexyl group, and further optionally, R₁ and R₂ are each independently one of a methyl group, an ethyl group, a propyl group, a fluoromethyl group, a fluoroethyl group, and a fluoropropyl group.

Unless otherwise stated, in the above chemical formula, when A includes more than two elements, the above limitation on the value range of x is not just a limitation on a stoichiometric number of each element as A, but also a limitation on a sum of stoichiometric numbers of all the elements as A. For example, when A includes more than two elements, A1, A2, ..., and An, stoichiometric numbers x1, x2, ..., and xn of all of A1, A2, ..., and An are each required to fall within the value range defined by this application for x, and a sum of x1, x2, ..., and xn are also required to fall within this value range. Similarly, for cases in which B, C, and D include more than two elements, the limitations on the value ranges of stoichiometric numbers of B, C, and D in this application also have the above meaning.

The secondary battery of this application utilizes doping of the positive electrode active material and improvement of composition of the electrolyte so as to not only effectively improve rate performance of the secondary battery, but also improve cycling performance of the secondary battery. Details are as follows.

The positive electrode active material of this application is obtained by elemental doping in a compound LiMnPO₄, where A, B, C, and D are elements doping at the Li site, Mn site, P site, and O site of the compound LiMnPO₄ respectively. Without wishing to be confined to theories, it is now considered that performance improvement of lithium manganese phosphate is related to reduction of lattice change rate and surface activity of lithium manganese phosphate during deintercalation or intercalation of lithium. Reduced lattice change rate can lead to reduced difference of lattice constants between two phases at a crystal boundary, reduced interfacial stress, and enhanced transport capacity of Li⁺ at an interface, thereby improving rate performance of the positive electrode active material. Whereas, high surface activity easily leads to serious interfacial side reactions, exacerbating gas production, electrolyte consumption, and damage of interface, thereby affecting performance of the battery in terms of cycling and the like. In this application, the lattice change rate is reduced through doping at the Li and Mn sites. Doping at the Mn site also effectively reduces the surface activity, thereby suppressing manganese ion dissolution and interfacial side reactions between the positive electrode active material and the electrolyte. Doping at the P site makes the change rate of Mn-O bond length faster and lowers a small-polaron migration barrier of the material, which is beneficial to electronic conductivity. Doping at the O site has a good effect on reducing the interfacial side reactions. The doping at the P and O sites also affects the dissolution of manganese ions in the antisite defects and kinetic performance. Therefore, doping reduces the antisite defect concentration in the material, improves the kinetic performance and gram capacity of the material, and also changes the morphology of particles, thereby increasing the compacted density. The applicant has surprisingly found that with simultaneous doping of a specific amount of a specific element given in this application at Li, Mn, P and O sites of the compound LiMnPO₄, significantly improved rate performance can be obtained, while the dissolution of Mn and elements doping at the Mn site is significantly reduced, significantly improved cycling performance and/or high-temperature stability is obtained, and the gram capacity and compacted density of the material can also be improved.

The first solvent in the non-aqueous electrolyte has good capability of dissociating lithium salts, but compared with carbonate, the first organic solvent has little interaction with Li⁺; and as the first solvent gradually dominates a first solvation shell, the desolvation energy of Li⁺ gradually decreases, which is conducive to the rapid intercalation and deintercalation of Li⁺ at the interface, thereby improving the rate performance of the secondary battery. In addition, the first solvent has low viscosity, which enables the lithium ions deintercalated from the positive electrode active material to rapidly migrate and intercalate into the negative electrode side, and under the driving of concentration polarization, enables the lithium ions at the interface of the positive electrode material to be rapidly transferred into the electrolyte, further improving the rate performance of the secondary battery.

In any embodiment of the first aspect, the first solvent includes at least one of the following compounds:

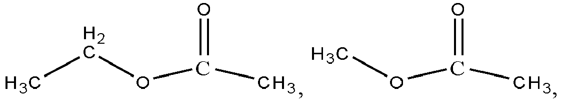

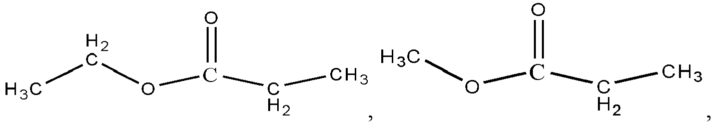

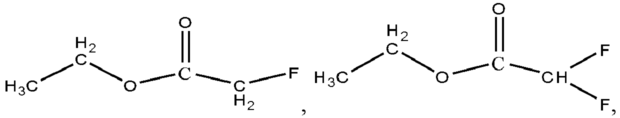

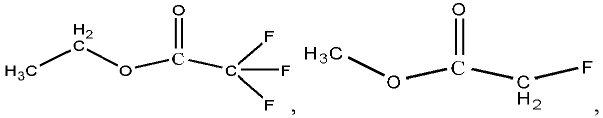

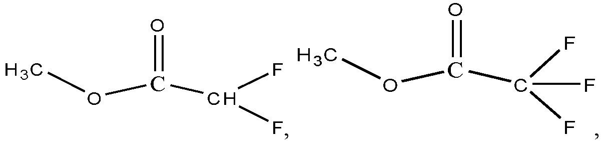

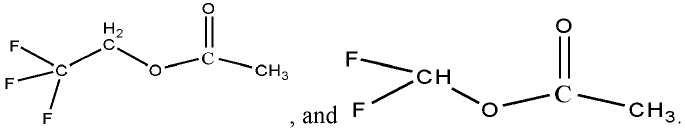

In any embodiment of the first aspect, optionally, the first solvent includes at least one of the following compounds:

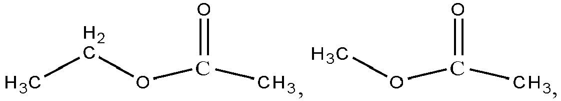

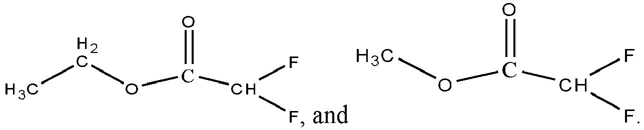

When the foregoing substances are selected as the first solvent, the electrolyte has lower viscosity and better infiltration, and thus has better lithium ion transport capacity, such that the rate performance of the secondary battery is better improved; and in addition, the foregoing first solvents have better chemical stability and better oxidation resistance to the positive electrode active material.

In any embodiment of the first aspect, based on total mass of the organic solvent, a mass percentage of the first solvent is w1, w1 ranging from 20% to 80%, and optionally, w1 ranging from 30% to 70%. By controlling the mass percentage as described above, it is possible to use the first solvent to improve the fast charge performance of the battery while providing the secondary battery with good cycling performance and storage performance.

In any embodiment of the first aspect, optionally, the organic solvent further includes a second solvent, the second solvent comprising one or more from a group consisting of linear carbonate and cyclic carbonate; and further optionally, based on the total mass of the organic solvent, a mass percentage of the second solvent is w2, w2 ranging from 20% to 80%, and optionally, w2 ranging from 30% to 70%. The second solvent can work together with the first solvent to improve the cycling performance of the secondary battery.

In any embodiment of the first aspect, the non-aqueous electrolyte further includes a first additive, where the first additive includes one or more from a group consisting of sultone and cyclic sulfate. The sultone or cyclic sulfate introduced into the non-aqueous electrolyte forms a layer of polymer with strong ion conductivity, for example, ester-based sulfate, on the surface of the positive electrode active material during charge of the secondary battery. The polymer can further improve the rate performance of the secondary battery, and can also effectively suppress the catalytic oxidation of the positive electrode active material to the first solvent, thereby improving the cycling performance and storage performance of the secondary battery. In addition, the sultone or cyclic sulfate is superior to the first solvent in forming a film at the negative electrode, reducing the reaction of α-H on the first solvent with the active lithium obtained by reduction at the negative electrode, thereby further improving the cycling performance and storage performance of the secondary battery.

In any embodiment of the first aspect, the sultone includes at least one of compounds represented by formula 2, 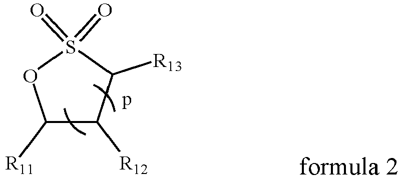
where p represents 1, 2, or 3;
R₁₁ represents one of a hydrogen atom, a halogen atom, a C1-C12 alkyl group, a C1-C12 halogenated alkyl group, a C1-C12 alkoxy group, and a C1-C12 halogenated alkoxy group; optionally, Rn represents one of a hydrogen atom, a halogen atom, a C1-C6 alkyl group, a C1-C3 halogenated alkyl group, a C1-C3 alkoxy group, and a C1-C3 halogenated alkoxy group; and optionally, the alkoxy group is a linear alkoxy group or a cyclic alkoxy group, optionally, the cyclic alkoxy group shares a carbon atom with a parent ring of the sultone, and further optionally, the cyclic alkoxy group has 4, 5, or 6 carbon atoms;
each R₁₂ independently represents one of a hydrogen atom, a halogen atom, a C1-C12 alkyl group, a C1-C12 halogenated alkyl group, a C1-C12 alkoxy group, a C1-C12 halogenated alkoxy group, and a 4- to 7-membered sultone group, and optionally each R₁₂ independently represents one of a hydrogen atom, a halogen atom, a C1-C3 alkyl group, a C1-C3 halogenated alkyl group, a C1-C3 alkoxy group, a C1-C3 halogenated alkoxy group, and a 5- or 6-membered sultone group; and optionally, the sultone group shares a carbon atom with the parent ring of the sultone, and optionally, the sultone group is a 5-membered ring;
R₁₁ and R₁₂ each form a 5- to 10-membered cycloalkyl group with respective carbon atoms bonded thereto; and
R₁₃ represents one of a hydrogen atom, a halogen atom, a carbonyl group, a C2-C6 ester group, a C1-C12 alkyl group, a C1-C12 halogenated alkyl group, a C2-C12 alkenyl group, a C1-C12 alkoxy group, a C1-C12 halogenated alkoxy group, and a C6-C20 aryl group or benzyl group; and optionally, R₁₃ represents one of a hydrogen atom, a halogen atom, a carbonyl group, a C2-C3 ester group, a C1-C3 alkyl group, a C1-C3 halogenated alkyl group, a C2-C6 alkenyl group, a C1-C3 alkoxy group, a C1-C3 halogenated alkoxy group, and a C6-C10 aryl group or benzyl group.

The sultone is commonly used sultone in the art and is widely available at a low cost.

In any embodiment of the first aspect, the cyclic sulfate includes at least one of compounds represented by formula 3, 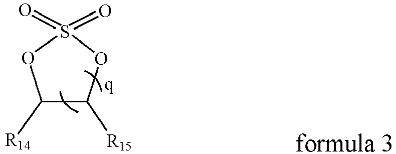
where q represents 1, 2, or 3;
R₁₄ represents one of a hydrogen atom, a halogen atom, a carbonyl group, a C1-C12 alkyl group, a C1-C12 halogenated alkyl group, a C2-C12 alkenyl group, a C1-C12 alkoxy group, a C1-C12 halogenated alkoxy group, a C2-C6 ester group, and a 4- to 7-membered cyclic sulfate group; optionally, R₁₄ represents one of a hydrogen atom, a halogen atom, a carbonyl group, a double bond, a C1-C6 alkyl group, a C1-C3 halogenated alkyl group, a C1-C3 alkoxy group, a C1-C3 halogenated alkoxy group, a C2-C3 ester group, and a 4- or 5-membered cyclic sulfate group; and optionally, the cyclic sulfate group shares a carbon atom with the cyclic sulfate; and
each R₁₅ independently represents one of a hydrogen atom, a halogen atom, a C1-C12 alkyl group, a C1-C12 halogenated alkyl group, a C1-C12 alkoxy group, a C1-C12 halogenated alkoxy group, and a C6-C20 aryl group; and optionally, each R₁₅ independently represents one of a hydrogen atom, a halogen atom, a C1-C6 alkyl group, a C1-C3 halogenated alkyl group, a C1-C3 alkoxy group, a C1-C3 halogenated alkoxy group, and a C6-C10 aryl group; or
R₁₄ and R₁₅ each form a 4- to 7-membered cyclic sulfate group together with respective carbon atoms bonded thereto, and further optionally, R₁₄ and R₁₅ each form a 5-membered cyclic sulfate group together with respective carbon atoms bonded thereto.

The cyclic sulfate is commonly used cyclic sulfate in the art and is widely available at a low cost.

In any embodiment of the first aspect, optionally, the sultone includes at least one of the following compounds:

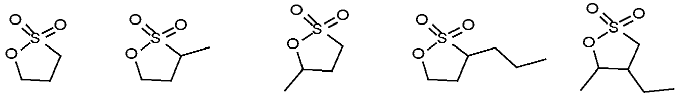

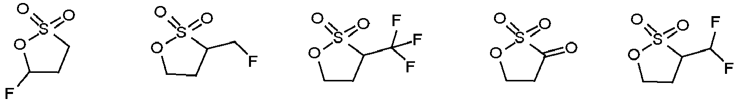

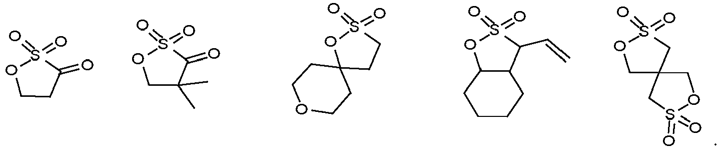

In any embodiment of the first aspect, optionally, the cyclic sulfate includes at least one of the following compounds:

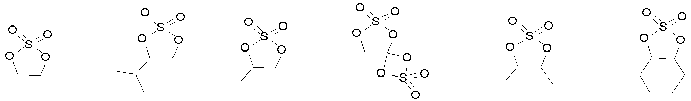

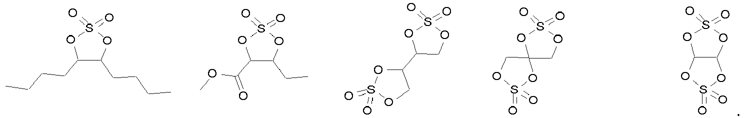

Further optionally, the sultone includes at least one of the following compounds:

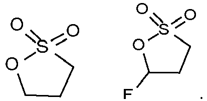

Further optionally, the cyclic sulfate includes at least one of the following compounds:

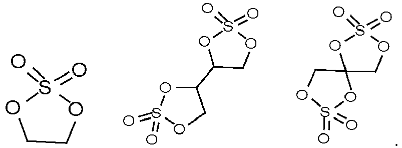

The sultone and the cyclic sulfate can more easily form a polymer at the positive electrode.

In any embodiment of the first aspect, based on total mass of the non-aqueous electrolyte, a percentage of the first additive is W3, and 0.01% ≤ W3 ≤ 20%, optionally, 0.1% ≤ W3 ≤ 10%, and further optionally, 0.2% ≤ W3 ≤ 5%. This avoids the increase in impedance of the positive and negative electrodes caused by the introduction of excessive sultone or cyclic sulfate, guaranteeing a significant improvement in the capacity and rate performance of the lithium-ion battery.

In any embodiment of the first aspect, the non-aqueous electrolyte further includes a second additive, where the second additive includes one or more from a group consisting of a sulfite compound, a disulfonate compound, a nitrile compound, an aromatic compound, a phosphazene compound, an anhydride compound, a phosphite compound, a phosphate compound, and a borate compound. The second additive helps to form a denser and more stable interface film on the surface of the positive electrode and/or negative electrode active material, thereby further improving at least one of the cycling performance, the storage performance, and the rate performance of the secondary battery.

In any embodiment of the first aspect, based on total mass of the non-aqueous electrolyte, a percentage of the second additive is W4, and 0.01% ≤ W4 ≤ 20%, optionally, 0.05% ≤ W4 ≤ 5%, and further optionally, 0.1% ≤ W4 ≤ 3%. Such percentage range enables the second additive to be fully utilized.

In any embodiment of the first aspect, A, C, and D in the positive electrode active material are each independently any one element within their respective ranges described above, and B is at least two elements. In this way, the compositions of the positive electrode active material can be more easily and accurately controlled.

In any embodiment of the first aspect, optionally, A is any one element selected from Mg and Nb. Selecting the element doping at the Li site within the foregoing range can further reduce the lattice change rate during deintercalation of lithium, thereby further improving the rate performance of the battery.

In any embodiment of the first aspect, optionally, B is at least two elements selected from Fe, Ti, V, Co, and Mg, optionally Fe and more than one element selected from Ti, V, Co, and Mg. Selecting the element doping at the Mn site within the foregoing range can further increase the electronic conductivity and further reduce the lattice change rate, thereby improving the rate performance and gram capacity of the battery.

In any embodiment of the first aspect, optionally, C is S. Selecting the element doping at the P site within the foregoing range can further improve the rate performance of the battery.

In any embodiment of the first aspect, optionally, D is F. Selecting the element doping at the O site within the foregoing range can further mitigate the interfacial side reactions, thereby improving the high-temperature performance of the battery.

In any embodiment of the first aspect, x is selected from a range of 0.001 to 0.005. Selecting the value of y within the foregoing range can further improve the gram capacity and rate performance of the material.

In any embodiment of the first aspect, y is selected from a range of 0.01 to 0.5, optionally from a range of 0.25 to 0.5. Selecting the value of x within the foregoing range can further improve the kinetic performance of the material.

In any embodiment of the first aspect, z is selected from a range of 0.001 to 0.005. Selecting the value of z within the foregoing range can further improve the rate performance of the secondary battery.

In any embodiment of the first aspect, n is selected from a range of 0.001 to 0.005. Selecting the value of n within the foregoing range can further improve the high-temperature performance of the secondary battery.

In any embodiment of the first aspect, the positive electrode active material satisfies the following: (1-y):y is within a range of 1 to 4, optionally within a range of 1.5 to 3, and a:x is within a range of 9 to 1100, optionally within a range of 190 to 998. Herein, y denotes the sum of the stoichiometric numbers of elements doping at the Mn site. The energy density and cycling performance of the positive electrode active material can be further improved when the preceding conditions are met.

In any embodiment of the first aspect, a lattice change rate of the positive electrode active material is below 8%, and optionally, the lattice change rate is below 4%. Reducing the lattice change rate can make Li ion transport easier, that is, migration capability of Li ions in the material is increased, which is conducive to improving the rate performance of the secondary battery. The lattice change rate can be measured in a method known in the art, for example, X-ray diffraction pattern (XRD).

In any embodiment of the first aspect, a Li/Mn antisite defect concentration of the positive electrode active material is below 2%, and optionally, the Li/Mn antisite defect concentration is below 0.5%. The Li/Mn antisite defect refers to site exchange of Li⁺ and Mn²⁺ in LiMnPO₄ lattice. The Li/Mn antisite defect concentration refers to a percentage of Li⁺ interchanged with Mn²⁺ in the total amount of Li⁺ in the positive electrode active material. The Mn²⁺ antisite defect hinders the Li⁺ transport, and decreasing the Li/Mn antisite defect concentration is conducive to improving the gram capacity and rate performance of the positive electrode active material. The Li/Mn antisite defect concentration can be measured in a method known in the art, for example, XRD.

In any embodiment of the first aspect, a surface oxygen valence of the positive electrode active material is below -1.82, optionally from -1.89 to -1.98. Reducing the surface oxygen valence can mitigate the interfacial side reactions between the positive electrode active material and the electrolyte, thereby improving the cycling performance and high-temperature stability of the secondary battery. The surface oxygen valence can be measured in a method known in the art, for example, electron energy loss spectroscopy (EELS).

In any embodiment of the first aspect, a compacted density under 3T (ton) of the positive electrode active material is above 2.0 g/cm³, optionally above 2.2 g/cm³. Higher compacted density indicates larger weight of active material per unit volume. Therefore, increasing the compacted density is conducive to increasing the volumetric energy density of the cell. The compacted density can be measured according to GB/T 24533-2009.

In any embodiment of the first aspect, a surface of the positive electrode active material is coated with carbon. In this way, the conductivity of the positive electrode active material can be improved.

A second aspect of this application further provides a battery module, where the battery module includes a secondary battery, and the secondary battery is any one of the foregoing secondary batteries of this application.

A third aspect of this application further provides a battery pack, where the battery pack includes a battery module, and the battery module is the foregoing battery module of this application.

A fourth aspect of this application further provides an electric apparatus, where the electric apparatus includes at least one of a secondary battery, a battery module, or a battery pack, and the secondary battery, battery module, and battery pack are the secondary battery, battery module, and battery pack provided in this application.

Therefore, the battery module and battery pack of this application have high cycling performance and rate performance, thus providing high kinetic cycling stability and rate performance for the electric apparatus having the secondary battery, battery module, or battery pack of this application.

### BRIEF DESCRIPTION OF DRAWINGS

To describe technical solutions of embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic diagram of a secondary battery according to an embodiment of this application.
FIG. 2 is an exploded view of the secondary battery according to the embodiment of this application shown in FIG. 1.
FIG. 3 is a schematic diagram of a battery module according to an embodiment of this application.
FIG. 4 is a schematic diagram of a battery pack according to an embodiment of this application.
FIG. 5 is an exploded view of the battery pack according to the embodiment of this application in FIG. 4.
FIG. 6 is a schematic diagram of an electric apparatus using a secondary battery as a power source according to an embodiment of this application.

The accompanying drawings are not drawn to scale.

### Description of reference signs:

1. battery pack; 2. upper box body; 3. lower box body; 4. battery module; 5. secondary battery; 51. housing; 52. electrode assembly; and 53. top cover assembly.

### DESCRIPTION OF EMBODIMENTS

The following further describes implementations of this application in detail with reference to the accompanying drawings and embodiments. The following detailed description of embodiments and the accompanying drawings are intended to illustrate the principle of this application rather than to limit the scope of this application, meaning this application is not limited to the embodiments as described.

The following specifically discloses in detail embodiments of the secondary battery, battery module, battery pack, and electric apparatus of this application with appropriate reference to the accompanying drawings. However, there may be cases where unnecessary detailed descriptions are omitted. For example, detailed descriptions of well-known matters and repeated descriptions of actually identical structures have been omitted. This is to avoid unnecessarily prolonging the following description, for ease of understanding by persons skilled in the art. In addition, the accompanying drawings and the following descriptions are provided for persons skilled in the art to fully understand this application and are not intended to limit the subject matter recorded in the claims.

"Ranges" disclosed in this application are defined in the form of lower and upper limits. A given range is defined by one lower limit and one upper limit selected, where the selected lower and upper limits define boundaries of that particular range. Ranges defined in this method may or may not include end values, and any combinations may be used, meaning any lower limit may be combined with any upper limit to form a range. For example, if ranges of 60-120 and 80-110 are provided for a specific parameter, it is understood that ranges of 60-110 and 80-120 can also be envisioned. In addition, if minimum values of a range are given as 1 and 2, and maximum values of the range are given as 3, 4, and 5, the following ranges can all be envisioned: 1-3, 1-4, 1-5, 2-3, 2-4, and 2-5. In this application, unless otherwise stated, a value range of "a-b" is a short representation of any combinations of real numbers between a and b, where both a and b are real numbers. For example, a value range of "0-5" means that all real numbers in the range of "0-5" are listed herein and "0-5" is just a short representation of combinations of these values. In addition, a parameter expressed as an integer greater than or equal to 2 is equivalent to disclosure that the parameter is, for example, an integer among 2, 3, 4, 5, 6, 7, 8, 9, 10, 11, 12, and so on.

Unless otherwise specified, all the embodiments and optional embodiments of this application can be combined with each other to form new technical solutions.

Unless otherwise specified, all the technical features and optional technical features of this application can be combined with each other to form new technical solutions.

Unless otherwise specified, all the steps in this application can be performed in the order described or in random order, and optionally, in the order described. For example, a method including steps (a) and (b) indicates that the method may include steps (a) and (b) performed in order or may include steps (b) and (a) performed in order. For example, the foregoing method may further include step (c), which indicates that step (c) may be added to the method in any ordinal position, for example, the method may include steps (a), (b), and (c), steps (a), (c), and (b), steps (c), (a), and (b), or the like.

Unless otherwise specified, "include" and "contain" mentioned in this application are inclusive or may be exclusive. For example, the terms "include" and "contain" can mean that other unlisted components may also be included or contained, or only listed components are included or contained.

Unless otherwise specified, in this application, the term "or" is inclusive. For example, the phrase "A or B" means "A, B, or both A and B". More specifically, any one of the following conditions satisfies the condition "A or B": A is true (or present) and B is false (or not present); A is false (or not present) and B is true (or present); or both A and B are true (or present).

### [Secondary battery]

A secondary battery, also referred to as a rechargeable battery or a storage battery, is a battery whose active material can be activated for continuous use through charging after the battery is discharged.

Normally, the secondary battery includes a positive electrode plate, a negative electrode plate, a separator, and an electrolyte. In a charge and discharge process of the battery, active ions (for example, lithium ions) are intercalated and deintercalated between the positive electrode plate and the negative electrode plate. The separator is disposed between the positive electrode plate and the negative electrode plate to mainly prevent a short circuit between positive and negative electrodes and to allow the active ions to pass through. The electrolyte is between the positive electrode plate and the negative electrode plate, playing a role of conducting active ions.

A first aspect of this application provides a secondary battery. The secondary battery includes a positive electrode plate and a non-aqueous electrolyte, where the positive electrode plate includes a positive electrode active material, the positive electrode active material having a chemical formula of LiₐAₓMn_{1-y}B_{y}P_{1-Z}C_{z}O₄₋ₙDₙ, where A includes one or more elements selected from a group consisting of Zn, Al, Na, K, Mg, Nb, Mo, and W, B includes one or more elements selected from a group consisting of Ti, V, Zr, Fe, Ni, Mg, Co, Ga, Sn, Sb, Nb, and Ge, C includes one or more elements selected from a group consisting of B (boron), S, Si, and N, D includes one or more elements selected from a group consisting of S, F, Cl, and Br, a is selected from a range of 0.9 to 1.1, x is selected from a range of 0.001 to 0.1, y is selected from a range of 0.001 to 0.5, z is selected from a range of 0.001 to 0.1, n is selected from a range of 0.001 to 0.1, and the positive electrode active material is electrically neutral.

The non-aqueous electrolyte includes an organic solvent, the organic solvent includes a first solvent, and the first solvent includes one or more of compounds represented by formula 1, 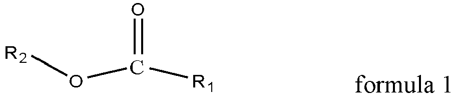 where R₁ and R₂ are each independently one of a C1-C10 alkyl group and a C1-C10 halogenated alkyl group, and optionally, R₁ and R₂ are each independently one of a methyl group, an ethyl group, a propyl group, a butyl group, a pentyl group, a hexyl group, a fluoromethyl group, a fluoroethyl group, a fluoropropyl group, a fluorobutyl group, a fluoropentyl group, and a fluorohexyl group.

Unless otherwise stated, in the above chemical formula, when A includes more than two elements, the above limitation on the value range of x is not just a limitation on a stoichiometric number of each element as A, but also a limitation on a sum of stoichiometric numbers of all the elements as A. For example, when A includes more than two elements, A1, A2, ..., and An, stoichiometric numbers x1, x2, ..., and xn of all of A1, A2, ..., and An are each required to fall within the value range defined by this application for x, and a sum of x1, x2, ..., and xn are also required to fall within this value range. Similarly, for cases in which B, C, and D include more than two elements, the limitations on the value ranges of stoichiometric numbers of B, C, and D in this application also have the above meaning.

The secondary battery of this application utilizes doping of the positive electrode active material and improvement of composition of the electrolyte so as to not only effectively improve rate performance of the secondary battery, but also improve cycling performance of the secondary battery. Details are as follows.

The positive electrode active material of this application is obtained by elemental doping in a compound LiMnPO₄, where A, B, C, and D are elements doping at the Li site, Mn site, P site, and O site of the compound LiMnPO₄ respectively. Without wishing to be confined to theories, it is now considered that performance improvement of lithium manganese phosphate is related to reduction of lattice change rate and surface activity of lithium manganese phosphate during deintercalation or intercalation of lithium. Reduced lattice change rate can lead to reduced difference of lattice constants between two phases at a crystal boundary, reduced interfacial stress, and enhanced transport capacity of Li⁺ at an interface, thereby improving rate performance of the positive electrode active material. Whereas, high surface activity easily leads to serious interfacial side reactions, exacerbating gas production, electrolyte consumption, and damage of interface, thereby affecting performance of the battery in terms of cycling and the like. In this application, the lattice change rate is reduced through doping at the Li and Mn sites. Doping at the Mn site also effectively reduces the surface activity, thereby suppressing manganese ion dissolution and interfacial side reactions between the positive electrode active material and the electrolyte. Doping at the P site makes the change rate of Mn-O bond length faster and lowers a small-polaron migration barrier of the material, which is beneficial to electronic conductivity. Doping at the O site has a good effect on reducing the interfacial side reactions. The doping at the P and O sites also affects the dissolution of manganese ions in the antisite defects and kinetic performance. Therefore, doping reduces the antisite defect concentration in the material, improves the kinetic performance and gram capacity of the material, and also changes the morphology of particles, thereby increasing the compacted density. The applicant has surprisingly found that with simultaneous doping of a specific amount of a specific element given in this application at Li, Mn, P and O sites of the compound LiMnPO₄, significantly improved rate performance can be obtained, while the dissolution of Mn and elements doping at the Mn site is significantly reduced, significantly improved cycling performance and/or high-temperature stability is obtained, and the gram capacity and compacted density of the material can also be improved.

The first solvent in the non-aqueous electrolyte has good capability of dissociating lithium salts, but compared with carbonate, the first organic solvent has little interaction with Li⁺; and as the first solvent gradually dominates a first solvation shell, the desolvation energy of Li⁺ gradually decreases, which is conducive to the rapid intercalation and deintercalation of Li⁺ at the interface, thereby improving the rate performance of the secondary battery. In addition, the first solvent has low viscosity, which enables the lithium ions deintercalated from the lithium manganese phosphate positive electrode material to rapidly migrate and intercalate into the negative electrode side, and under the driving of concentration polarization, enables the lithium ions at the interface of the positive electrode material to be rapidly transferred into the electrolyte, further improving the rate performance of the secondary battery.

The first solvent for use in this application may be any carboxylate covered by the foregoing formula 1, and in some embodiments of the first aspect, the foregoing first solvent includes at least one of the following compounds:

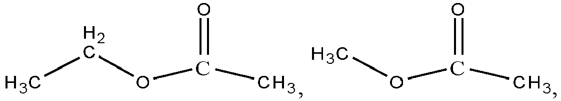

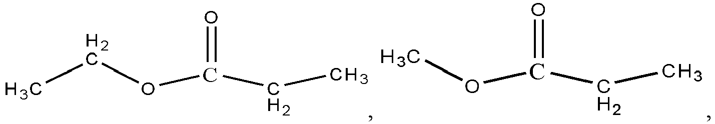

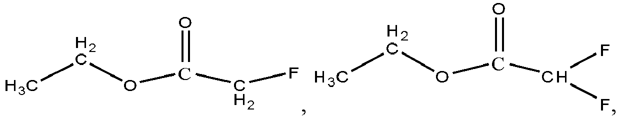

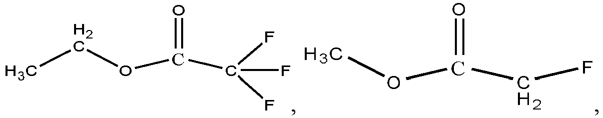

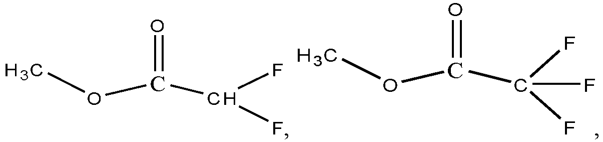

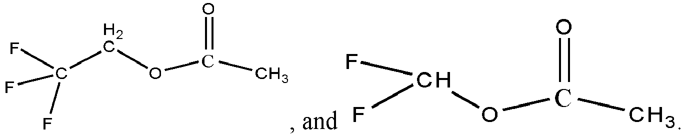

Further, in some embodiments of the first aspect, optionally, the first solvent includes at least one of the following compounds:

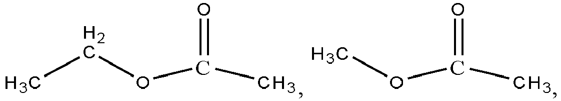

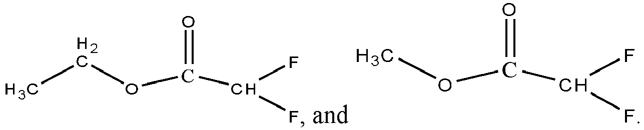

When the foregoing substances are selected as the first solvent, the electrolyte has lower viscosity, better infiltration, and higher conductivity, and thus has better lithium ion transport capacity, such that the rate performance of the secondary battery is better improved; and in addition, the foregoing first solvents have better chemical stability and better oxidation resistance to the positive electrode active material.

Although with the advantages of low viscosity and high conductivity, the first solvent is prone to chemical reactions with the positive and negative electrodes of the secondary battery, which in turn affects the cycling performance of the secondary battery. In some embodiments of the first aspect, based on total mass of the non-aqueous electrolyte, a mass percentage of the first solvent is w1, w1 ranging from 20% to 80% (for example, 20%, 25%, 30%, 35%, 40%, 45%, 50%, 55%, 60%, 65%, 70%, 75%, or 80%), and optionally w1 ranging from 30% to 70%. By controlling the mass percentage as described above, it is possible to use the first solvent to improve the fast charge performance of the battery while effectively controlling side reactions between the first solvent and the positive and negative electrodes of the secondary battery, so that the secondary battery has good cycling performance and storage performance.

With the first solvent used as the solvent of the non-aqueous electrolyte in this application, to ensure that the secondary battery has high cycling performance and storage performance as much as possible, in some embodiments of the first aspect, optionally, the organic solvent further includes a second solvent, where the second solvent includes one or more from a group consisting of linear carbonate and cyclic carbonate; and further optionally, based on the total mass of the organic solvent, a mass percentage of the second solvent is w2, w2 ranging from 20% to 80% (for example, 20%, 25%, 30%, 35%, 40%, 45%, 50%, 55%, 60%, 65%, 70%, 75%, or 80%), and optionally, w2 ranging from 30% to 70%. The second solvent can work together with the first solvent to improve the cycling performance of the secondary battery.

The types of the linear carbonate and cyclic carbonate of the foregoing second solvent are not particularly limited, and may be selected depending on actual needs; and optionally, the second solvent may include one or more of dimethyl carbonate, diethyl carbonate, dipropyl carbonate, ethyl methyl carbonate, methyl propyl carbonate, ethylene propyl carbonate, ethylene carbonate, propylene carbonate, butylene carbonate, γ-butyrolactone, methyl formate, ethyl formate, methyl acetate, ethyl acetate, propyl acetate, methyl propionate, ethyl propionate, and methyl propionate.

In some embodiments of the first aspect, the solvent of the non-aqueous electrolyte may further include common solvents such as tetrahydrofuran, 1,4-butyrolactone, sulfolane, dimethylsulfone, methyl ethylsulfone, and diethylsulfone. Details are not described herein.

Generally, the non-aqueous electrolyte further optionally includes an additive. For example, the additive may include a negative electrode film-forming additive or a positive electrode film-forming additive, or may include an additive capable of improving some performance of the battery, for example, an additive for improving overcharge performance of the battery, or an additive for improving high-temperature or low-temperature performance of the battery.

Further, in some embodiments of the first aspect, the non-aqueous electrolyte further includes a first additive, where the first additive includes one or more from a group consisting of sultone and cyclic sulfate. The sultone or cyclic sulfate introduced into the non-aqueous electrolyte forms a layer of polymer with strong ion conductivity, for example, ester-based sulfate, on the surface of the positive electrode active material during charge of the secondary battery. The polymer can further improve the rate performance of the secondary battery, and can also effectively suppress the catalytic oxidation of the positive electrode active material to the first solvent, thereby improving the cycling performance and storage performance of the secondary battery. In addition, the sultone or cyclic sulfate is superior to the first solvent in forming a film at the negative electrode, reducing the reaction of α-H on the first solvent with the active lithium obtained by reduction at the negative electrode, thereby further improving the cycling performance and storage performance of the secondary battery.

The sultone and the cyclic sulfate for use in the foregoing embodiments of this application may be the corresponding substances commonly used in the prior art. In some embodiments of the first aspect, the sultone includes at least one of compounds represented by formula 2: 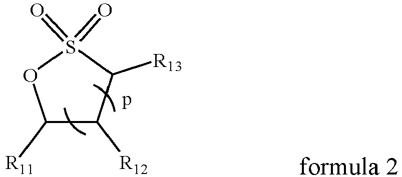
where p represents 1, 2, or 3;
R₁₁ represents one of a hydrogen atom, a halogen atom, a C1-C12 alkyl group, a C1-C12 halogenated alkyl group, a C1-C12 alkoxy group, and a C1-C12 halogenated alkoxy group; optionally, Rn represents one of a hydrogen atom, a halogen atom, a C1-C6 alkyl group, a C1-C3 halogenated alkyl group, a C1-C3 alkoxy group, and a C1-C3 halogenated alkoxy group; and optionally, the alkoxy group is a linear alkoxy group or a cyclic alkoxy group, optionally, the cyclic alkoxy group shares a carbon atom with a parent ring of the sultone, and further optionally, the cyclic alkoxy group has 4, 5, or 6 carbon atoms;
each R₁₂ independently represents one of a hydrogen atom, a halogen atom, a C1-C12 alkyl group, a C1-C12 halogenated alkyl group, a C1-C12 alkoxy group, a C1-C12 halogenated alkoxy group, and a 4- to 7-membered sultone group, and optionally each R₁₂ independently represents one of a hydrogen atom, a halogen atom, a C1-C3 alkyl group, a C1-C3 halogenated alkyl group, a C1-C3 alkoxy group, a C1-C3 halogenated alkoxy group, and a 5- or 6-membered sultone group; and optionally, the sultone group shares a carbon atom with the parent ring of the sultone, and optionally, the sultone group is a 5-membered ring;
R₁₁ and R₁₂ each form a 5- to 10-membered cycloalkyl group with respective carbon atoms bonded thereto; and
R₁₃ represents one of a hydrogen atom, a halogen atom, a carbonyl group, a C2-C6 ester group, a C1-C12 alkyl group, a C1-C12 halogenated alkyl group, a C2-C12 alkenyl group, a C1-C12 alkoxy group, a C1-C12 halogenated alkoxy group, and a C6-C20 aryl group or benzyl group; and optionally, R₁₃ represents one of a hydrogen atom, a halogen atom, a carbonyl group, a C2-C3 ester group, a C1-C3 alkyl group, a C1-C3 halogenated alkyl group, a C2-C6 alkenyl group, a C1-C3 alkoxy group, a C1-C3 halogenated alkoxy group, and a C6-C10 aryl group or benzyl group.

In some embodiments of the first aspect, the cyclic sulfate includes at least one of compounds represented by formula 3, 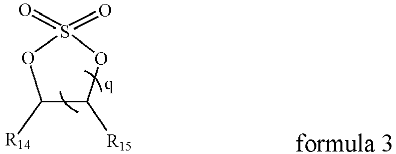
where q represents 1, 2, or 3;
R₁₄ represents one of a hydrogen atom, a halogen atom, a carbonyl group, a C1-C12 alkyl group, a C1-C12 halogenated alkyl group, a C2-C12 alkenyl group, a C1-C12 alkoxy group, a C1-C12 halogenated alkoxy group, a C2-C6 ester group, and a 4- to 7-membered cyclic sulfate group; optionally, R₁₄ represents one of a hydrogen atom, a halogen atom, a carbonyl group, a double bond, a C1-C6 alkyl group, a C1-C3 halogenated alkyl group, a C1-C3 alkoxy group, a C1-C3 halogenated alkoxy group, a C2-C3 ester group, and a 4- or 5-membered cyclic sulfate group; and optionally, the cyclic sulfate group shares a carbon atom with the cyclic sulfate; and
each R₁₅ independently represents one of a hydrogen atom, a halogen atom, a C1-C12 alkyl group, a C1-C12 halogenated alkyl group, a C1-C12 alkoxy group, a C1-C12 halogenated alkoxy group, and a C6-C20 aryl group; and optionally, each R₁₅ independently represents one of a hydrogen atom, a halogen atom, a C1-C6 alkyl group, a C1-C3 halogenated alkyl group, a C1-C3 alkoxy group, a C1-C3 halogenated alkoxy group, and a C6-C10 aryl group; or
R₁₄ and R₁₅ each form a 4- to 7-membered cyclic sulfate group together with respective carbon atoms bonded thereto, and further optionally, R₁₄ and R₁₅ each form a 5-membered cyclic sulfate group together with respective carbon atoms bonded thereto.

The cyclic sulfate is commonly used cyclic sulfate in the art and is widely available at a low cost.

To further optimize the film-forming effect of the first additive on the surfaces of the positive and negative electrodes, in some embodiments of the first aspect, optionally, the sultone includes at least one of the following compounds:

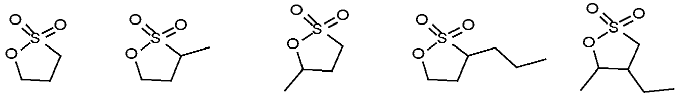

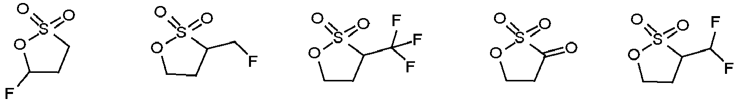

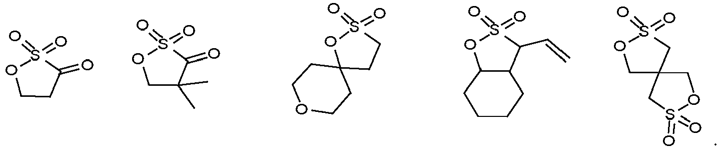

Optionally, the cyclic sulfate includes at least one of the following compounds:

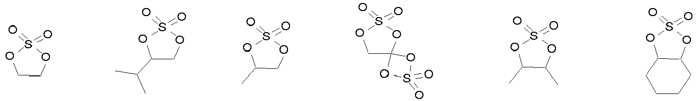

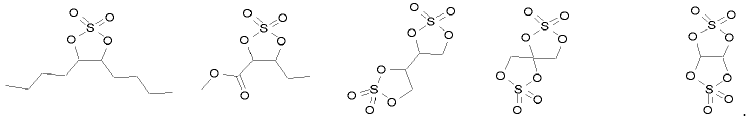

Further optionally, the sultone includes at least one of the following compounds:

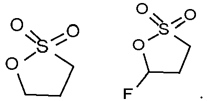

Further optionally, the cyclic sulfate includes at least one of the following compounds:

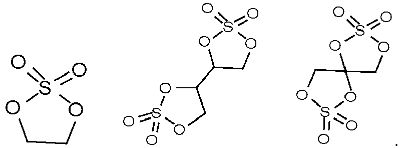

The sultone and the cyclic sulfate can more easily form a polymer at the positive electrode.

Compared with the first solvent, although the sultone and the cyclic sulfate can improve the cycling performance and storage performance of the secondary battery, excessive amounts of them being used may lead to increased impedance of the positive and negative electrodes of the secondary battery, affecting the rate performance of the secondary battery. Persons skilled in the art can select the amounts of the sultone and the cyclic sulfate used in the non-aqueous electrolyte of this application by consulting the conventional amounts of sultone and cyclic sulfate used. In some embodiments of the first aspect, a percentage of the first additive is W3, and 0.01% ≤ W3 ≤ 20% (for example, 0.01%, 0.05%, 0.1%, 0.2%, 0.5%, 1%, 2%, 3%, 4%, 5%, 10%, 15%, or 20%), optionally, 0.1% ≤ W3 ≤ 10%, and further optionally, 0.2% ≤ W3 ≤ 5%. On the basis of effective inhabitation of the degradation of the cycling performance caused by the first solvent, this avoids the increase in impedance of the positive and negative electrode caused by the introduction of excessive sultone or cyclic sulfate, guaranteeing a significant improvement in the capacity and rate performance of the lithium-ion battery.

In some embodiments, the non-aqueous electrolyte for use in this application further includes a second additive, where the second additive includes one or more from a group consisting of a sulfite compound, a disulfonate compound, a nitrile compound, an aromatic compound, a phosphazene compound, an anhydride compound, a phosphite compound, a phosphate compound, and a borate compound. The second additive helps to form a denser and more stable interface film on the surface of the positive electrode and/or negative electrode active material, thereby further improving at least one of the cycling performance, the storage performance, and the rate performance of the secondary battery.

In some embodiments, based on total mass of the non-aqueous electrolyte, a percentage of the second additive is W4, and 0.01% ≤ W4 ≤ 20%, optionally, 0.05% ≤ W4 ≤ 5%, and further optionally, 0.1% ≤ W4 ≤ 3%. Such percentage range enables the second additive to be fully utilized.

Some of these second additives are illustrated below.

### Sulfite compound

The sulfite compound is optionally a cyclic sulfite compound, and specifically may be one or more selected from compounds represented by formula 4.

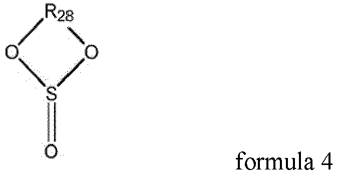

In formula 4, R₂₈ is selected from a substituted or unsubstituted C1-C6 alkylene group or a substituted or unsubstituted C2-C6 alkenylene group, where the substituent group is one or more selected from a halogen atom, a C1-C3 alkyl group, and a C2-C4 alkenyl group.

In formula 4, optionally, R₂₈ is selected from a substituted or unsubstituted C1-C4 alkylene group or a substituted or unsubstituted C2-C4 alkenylene group, where the substituent group is one or more selected from a halogen atom, a C1-C3 alkyl group, and a C2-C4 alkenyl group.

Optionally, the sulfite compound may be one or more selected from ethylene sulfite (ES for short), propylene sulfite (PS for short), and butylene sulfite (BS for short).

### Disulfonate compound

The disulfonate compound is a compound containing two sulfonic acid groups (-S(=O)₂O-), optionally selected from a methylene disulfonate compound, and the methylene disulfonate compound may be one or more selected from compounds represented by formula 5. In formula 5, R₂₄, R₂₅, R₂₆, and R₂₇ are each independently selected from a hydrogen atom, a halogen atom, a substituted or unsubstituted C1-C10 alkyl group, and a substituted or unsubstituted C2-C10 alkenyl group, where the substituent group is one or more selected from a halogen atom, a C1-C3 alkyl group, and a C2-C4 alkenyl group.

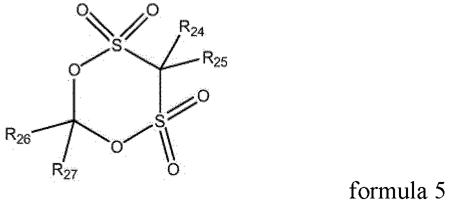

In formula 5, optionally, R₂₄, R₂₅, R₂₆, R₂₇ are each independently selected from a hydrogen atom, a halogen atom, a substituted or unsubstituted C1-C4 alkyl group, and a substituted or unsubstituted C2-C6 alkenyl group, where the substituent group is one or more selected from a halogen atom, a C1-C3 alkyl group, and a C2-C4 alkenyl group.

Optionally, the disulfonate compound may be specifically one or more selected from the following compounds, but this application is not limited thereto:

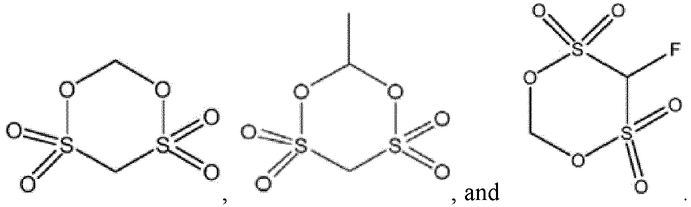

Further optionally, the disulfonate compound may be selected from methylene methane disulfonate (MMDS for short), with the following specific structure:

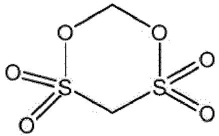

### Nitrile compound

The nitrile compound may be any one or more of compounds represented by formula 6 or formula 7:

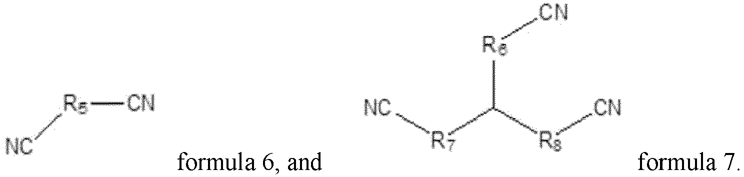

In formula 6 and formula 7, R₅ is selected from a substituted or unsubstituted C1-C12 alkylene group, a substituted or unsubstituted C2-C12 alkenylene group, and a substituted or unsubstituted C2-C12 alkynylene group, and R₆, R₇, and R₈ are each independently selected from a substituted or unsubstituted C0-C12 alkylene group, a substituted or unsubstituted C2-C12 alkenylene group, and a substituted or unsubstituted C2-C12 alkynylene group, where the substituent group is one or more selected from a halogen atom, a nitrile group, a C1-C6 alkyl group, a C2-C6 alkenyl group, and a C1-C6 alkoxy group. Optionally, R₅ is selected from a substituted or unsubstituted C1-C10 alkylene group, a substituted or unsubstituted C2-C10 alkenylene group, and a substituted or unsubstituted C2-C10 alkynylene group, and R₆, R₇, and R₈ each are one or more independently selected from a substituted or unsubstituted C0-C10 alkylene group, a substituted or unsubstituted C2-C10 alkenylene group, and a substituted or unsubstituted C2-C10 alkynylene group, where the substituent group is selected from a halogen atom.

Further optionally, in formula 6, R₅ is selected from a C1-C6 alkylene group, a C₂-C₆ alkenylene group, and a C₂-C₆ alkynylene group, and optionally, R₅ is selected from a C₂-C₄ alkylene group, a C₂-C₄ alkenylene group, and a C₂-C₄ alkynylene group; and in formula 7, R₆, R₇, and R₈ are each independently selected from a C₀-C₆ alkylene group, a C₂-C₆ alkenylene group, and a C₂-C₆ alkynylene group, and optionally, R₆ is selected from a C₀-C₁ alkylene group, and R₇, R₈ are each independently selected from a C₂-C₄ alkylene group, a C₂-C₄ alkenylene group, and a C₂-C₄ alkynylene group.

In some embodiments, the nitrile compound is one or more selected from ethanedinitrile, succinonitrile, glutaronitrile, adiponitrile, pimelonitrile, suberonitrile, azelanitrile, sebaconitrile, undecanedinitrile, dodecanedinitrile, tetramethylsuccinonitrile, methylglutaronitrile, butenedinitrile, 2-pentenedinitrile, hexyl-2-enedinitrile, hexyl-3-enedinitrile, octyl-4-enedinitrile, octyl-4-enedinitrile, 1,2,3-propanetricarbonitrile, 1,3,5-pentanetricarbonitrile, and 1,3,6-hexanetricarbonitrile.

### Aromatic compound

The aromatic compound may be one or more selected from cyclohexylbenzene, fluorocyclohexylbenzene compounds (1-fluoro-2-cyclohexylbenzene, 1-fluoro-3-cyclohexylbenzene, and 1-fluoro-4-cyclohexylbenzene), tert-butylbenzene, tert-amylbenzene, 1-fluoro-4-tert-butylbenzene, biphenyl, terphenyl (ortho-position, meta-position, and para-position), diphenyl ether, fluorobenzene, difluorobenzene (ortho-position, meta-position, and para-position), anisole, 2,4-difluoroanisole, and some hydrides of terphenyl (1,2-dicyclohexylbenzene, 2-phenylbicyclohexyl, 1,2-diphenylcyclohexane, and o-cyclohexylbiphenyl).

Optionally, the aromatic compound may be one or more selected from biphenyl, triphenyl (ortho-position, meta-position, and para-position), fluorobenzene, cyclohexylbenzene, tert-butylbenzene, and tert-amylbenzene, and further optionally, the aromatic compound may be one or more selected from biphenyl, o-terphenyl, fluorobenzene, cyclohexylbenzene, and tert-amylbenzene.

### Phosphazene compound

The phosphazene compound is optionally a cyclic phosphazene compound. The cyclic phosphazene compound may be one or more selected from methoxy(pentafluoro)cyclotriphosphazene, ethoxy(pentafluoro)cyclotriphosphazene, phenoxy(pentafluoro)cyclotriphosphazene, and ethoxy(heptafluoro)cyclotetraphosphazene.

Optionally, the cyclic phosphazene compound may be one or more selected from methoxy(pentafluoro)cyclotriphosphazene, ethoxy(pentafluoro)cyclotriphosphazene, and phenoxy(pentafluoro)cyclotriphosphazene.

Further optionally, the cyclic phosphazene compound may be selected from methoxy(pentafluoro)cyclotriphosphazene or ethoxy(pentafluoro)cyclotriphosphazene.

### Anhydride compound

The anhydride compound may be linear anhydride or cyclic anhydride. Specifically, the anhydride compound may be one or more selected from acetic anhydride, propionic anhydride, succinic anhydride, maleic anhydride, 2-allyl succinic anhydride, glutaric anhydride, itaconic anhydride, and 3-sulfo-propionic anhydride.

Optionally, the anhydride compound may be one or more selected from succinic anhydride, maleic anhydride, and 2-allyl succinic anhydride. Further optionally, the anhydride compound may be one or two selected from succinic anhydride and 2-allyl succinic anhydride.

### Phosphite compound

The phosphite compound may be one or more selected from a silane phosphite compound, and specifically may be one or more selected from compounds represented by formula 8. In formula 8, R₃₁, R₃₂, R₃₃, R₃₄, R₃₅, R₃₆, R₃₇, R₃₈, and R₃₉ are each independently selected from a halogen substituted or unsubstituted C1-C6 alkyl group.

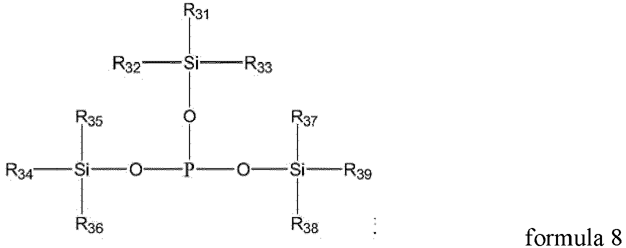

Optionally, the silane phosphite compound may be specifically one or more selected from the following compounds, but this application is not limited thereto:

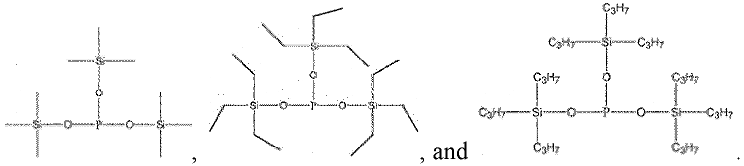

### Phosphate compound

The phosphate compound may be one or more selected from a silane phosphate compound, and specifically may be one or more selected from compounds represented by formula 9. In formula 9, R₄₁, R₄₂, R₄₃, R₄₄, R₄₅, R₄₆, R₄₇, R₄₈, and R₄₉ are each independently selected from a halogen substituted or unsubstituted C1-C6 alkyl group.

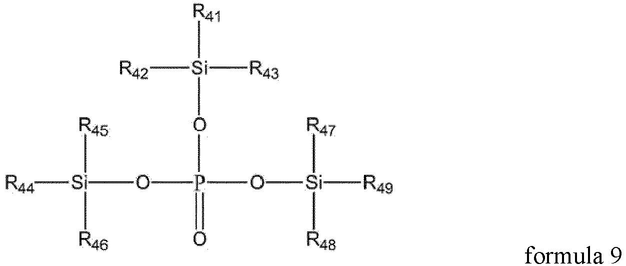

Optionally, the silane phosphate compound may be specifically one or more selected from the following compounds, but this application is not limited thereto:

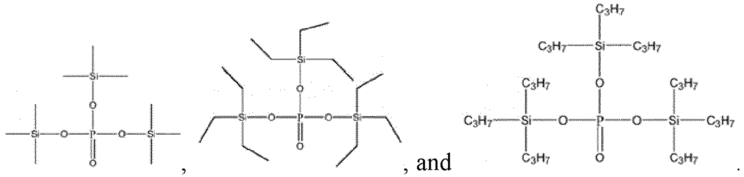

### Borate compound

The borate compound may be one or more selected from a silane borate compound, and specifically may be one or more selected from compounds represented by formula 10. In formula 10, R₅₁, R₅₂, R₅₃, R₅₄, R₅₅, R₅₆, R₅₇, R₅₈, and R₅₉ are each independently selected from a halogen substituted or unsubstituted C1-C6 alkyl group.

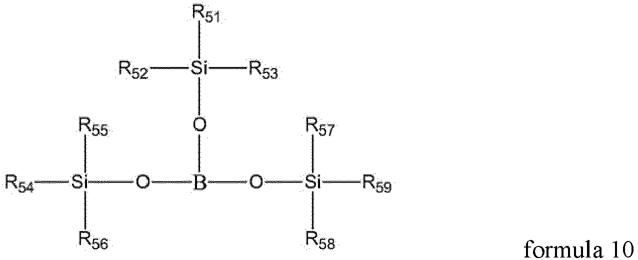

Optionally, the silane borate compound may be specifically one or more selected from the following compounds, but this application is not limited thereto:

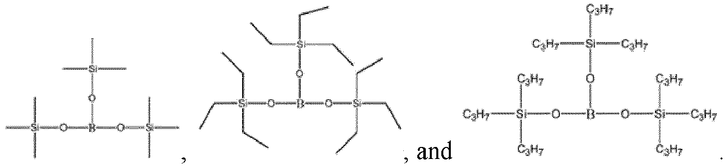

In addition, the non-aqueous electrolyte in the secondary battery of this application further includes a lithium salt, and a type of the lithium salt is not particularly limited and may be selected depending on actual needs. For example, the lithium salt may be one or more selected from LiN(C_{x'}F_{2x'+1}SO₂)(C_{y'}F_{2y'+1}SO₂), LiPF₆, LiBF₄, LiBOB, LiAsF₆, Li(FSO₂)₂N, LiCF₃SO₃, and LiClO₄, where x' and y' are natural numbers, for example, x' and y' are each independently 0, 1, 2, 3, 4, 5, 6, or the like. In some embodiments, a concentration of the lithium salt ranges from 0.5 mol/L to 2.5 mol/L, optionally from 0.8 mol/L to 2 mol/L.

### [Positive electrode plate]

A positive electrode plate includes a positive electrode current collector and a positive electrode film layer disposed on at least one surface of the positive electrode current collector, and the positive electrode film layer includes a positive electrode active material.

For example, the positive electrode current collector includes two opposite surfaces in its thickness direction, and the positive electrode film layer is disposed on either or both of the two opposite surfaces of the positive electrode current collector.

In some embodiments, the positive electrode current collector may be a metal foil current collector or a composite current collector. For example, an aluminum foil may be used as the metal foil. The composite current collector may include a polymer material matrix and a metal layer formed on at least one surface of the polymer material matrix. The composite current collector may be formed by forming a metal material (aluminum, aluminum alloy, nickel, nickel alloy, titanium, titanium alloy, silver, silver alloy, or the like) on the polymer material matrix (for example, matrices of polypropylene (PP), polyethylene terephthalate (PET), polybutylene terephthalate (PBT), polystyrene (PS), and polyethylene (PE)).

In some embodiments of the first aspect, A, C, and D in the positive electrode active material are each independently any one element within their respective ranges described above, and B is at least two elements. In this way, the compositions of the positive electrode active material can be more easily and accurately controlled.

Optionally, A is any one element selected from Mg and Nb. Selecting the element doping at the Li site within the foregoing range can further reduce the lattice change rate during deintercalation of lithium, thereby further improving the rate performance of the battery.

Optionally, B is at least two elements selected from Fe, Ti, V, Co, and Mg, optionally Fe and more than one element selected from Ti, V, Co, and Mg. Selecting the element doping at the Mn site within the foregoing range can further increase the electronic conductivity and further reduce the lattice change rate, thereby improving the rate performance and gram capacity of the battery.

Optionally, C is S. Selecting the element doping at the P site within the foregoing range can further improve the rate performance of the battery.

Optionally, D is F. Selecting the element doping at the O site within the foregoing range can further mitigate the interfacial side reactions, thereby improving the high-temperature performance of the battery.

In some embodiments of the first aspect, x is selected from a range of 0.001 to 0.005 (for example, 0.001, 0.002, 0.003, 0.004, or 0.005); and/or y is selected from a range of 0.01 to 0.5 (for example, 0.01, 0.05, 0.1, 0.2, 0.25, 0.3, 0.35, 0.4, 0.45, or 0.5), optionally from a range of 0.25 to 0.5; and/or z is selected from a range of 0.001 to 0.005 (for example, 0.001, 0.002, 0.003, 0.004, or 0.005); and/or n is selected from a range of 0.001 to 0.005 (for example, 0.001, 0.002, 0.003, 0.004, or 0.005). Selecting the value of y within the foregoing range can further improve the gram capacity and rate performance of the material. Selecting the value of x within the foregoing range can further improve the kinetic performance of the material. Selecting the value of z within the foregoing range can further improve the rate performance of the secondary battery. Selecting the value of n within the foregoing range can further improve the high-temperature performance of the secondary battery.

In some embodiments of the first aspect, the positive electrode active material satisfies the following: (1-y):y is within a range of 1 to 4, optionally within a range of 1.5 to 3, and a:x is within a range of 9 to 1100, optionally within a range of 190 to 998. Herein, y denotes the sum of the stoichiometric numbers of elements doping at the Mn site. The energy density and cycling performance of the positive electrode active material can be further improved when the preceding conditions are met.

In some embodiments of the first aspect, a lattice change rate of the positive electrode active material is below 8%, and optionally, the lattice change rate is below 4%. Reducing the lattice change rate can make Li ion transport easier, that is, migration capability of Li ions in the material is increased, which is conducive to improving the rate performance of the secondary battery. The lattice change rate can be measured in a method known in the art, for example, X-ray diffraction pattern (XRD).

In some embodiments of the first aspect, a Li/Mn antisite defect concentration of the positive electrode active material is below 2%, and optionally, the Li/Mn antisite defect concentration is below 0.5%. The Li/Mn antisite defect refers to site exchange of Li⁺ and Mn²⁺ in LiMnPO₄ lattice. The Li/Mn antisite defect concentration refers to a percentage of Li⁺ interchanged with Mn²⁺ in the total amount of Li⁺ in the positive electrode active material. The Mn²⁺ antisite defect hinders the Li⁺ transport, and decreasing the Li/Mn antisite defect concentration is conducive to improving the gram capacity and rate performance of the positive electrode active material. The Li/Mn antisite defect concentration can be measured in a method known in the art, for example, XRD.

In some embodiments of the first aspect, a surface oxygen valence of the positive electrode active material is below -1.82, optionally from -1.89 to -1.98. Reducing the surface oxygen valence can mitigate the interfacial side reactions between the positive electrode active material and the electrolyte, thereby improving the cycling performance and high-temperature stability of the secondary battery. The surface oxygen valence can be measured in a method known in the art, for example, electron energy loss spectroscopy (EELS).

In some embodiments of the first aspect, a compacted density under 3T (ton) of the positive electrode active material is above 2.0 g/cm³, optionally above 2.2 g/cm³. Higher compacted density indicates larger weight of active material per unit volume. Therefore, increasing the compacted density is conducive to increasing the volumetric energy density of the cell. The compacted density can be measured according to GB/T 24533-2009.

In some embodiments of the first aspect, a surface of the positive electrode active material is coated with carbon. In this way, the conductivity of the positive electrode active material can be improved.

The following describes a preparation method of the positive electrode active material of this application, but the following description is merely for illustrative purposes, and persons skilled in the art may use other methods that can be implemented to prepare the positive electrode active material of this application.

In some embodiments, the preparation method of the positive electrode active material includes: step (1): dissolving a manganese source, a source of element B, and an acid in a solvent and stirring to generate a suspension of a manganese salt doped with element B, and filtering the suspension and drying a filter cake to obtain the manganese salt doped with element B; step (2): adding a lithium source, a phosphorus source, a source of element A, a source of element C, a source of element D, a solvent, and the manganese salt doped with element B obtained in step (1) into a reaction vessel for grinding and mixing to obtain a slurry; step (3): transferring the slurry obtained in step (2) to a spray drying device for spray drying and granulation to obtain particles; and step (4): sintering the particles obtained in step (3) to obtain the positive electrode active material.

Optionally, the stirring in step (1) is performed at a temperature within a range of 60°C to 120°C; and/or the stirring in step (1) is performed at a stirring speed of 200 rpm to 800 rpm.

Optionally, the grinding and mixing in step (2) are performed for 8 hours to 15 hours.

Optionally, the sintering in step (4) is performed for 6 hours to 14 hours at a temperature within a range of 600°C to 900°C.

Optionally, the source of element A is selected from at least one of elementary substance, oxide, phosphate, oxalate, carbonate, and sulfate of element A; the source of element B is selected from at least one of elementary substance, oxide, phosphate, oxalate, carbonate, and sulfate of element B; the source of element C is selected from at least one of sulfate, borate, nitrate, and silicate of element C; and the source of element D is selected from at least one of elementary substance and ammonium salt of element D.

In some embodiments, the positive electrode film layer may further include a well-known positive electrode active material used for secondary batteries in the art. For example, the positive electrode active material may include at least one of the following materials: olivine-structured lithium-containing phosphate, lithium transition metal oxide, and respective modified compounds thereof. However, this application is not limited to such materials, but may use other conventional materials that can be used as positive electrode active materials for secondary batteries instead. One type of these positive electrode active materials may be used alone, or two or more of them may be used in combination. Examples of the lithium transition metal oxide may include but are not limited to at least one of lithium nickel oxide (for example, LiNiO₂), lithium manganese oxide (for example, LiMnO₂ and LiMn₂O₄), lithium nickel cobalt oxide, lithium manganese cobalt oxide, lithium nickel manganese oxide, and modified compounds thereof. Examples of the olivine-structured lithium-containing phosphate may include but are not limited to at least one of lithium iron phosphate (for example, LiFePO₄ (LFP for short)), a composite material of lithium iron phosphate and carbon, lithium manganese phosphate (for example, LiMnPO₄), a composite material of lithium manganese phosphate and carbon, lithium manganese iron phosphate, and a composite material of lithium manganese iron phosphate and carbon.

In some embodiments, the positive electrode film layer further optionally includes a binder. For example, the binder may include at least one of polyvinylidene fluoride (PVDF), polytetrafluoroethylene (PTFE), vinylidene fluoride-tetrafluoroethylene-propylene terpolymer, vinylidene fluoride-hexafluoropropylene-tetrafluoroethylene terpolymer, tetrafluoroethylene-hexafluoropropylene copolymer, and fluorine-containing acrylic resin.

In some embodiments, the positive electrode film layer further optionally includes a conductive agent. For example, the conductive agent may include at least one of superconducting carbon, acetylene black, carbon black, Ketjen black, carbon dots, carbon nanotubes, graphene, and carbon nanofiber.

In some embodiments, the positive electrode plate may be prepared in the following manner: the foregoing constituents used for preparing the positive electrode plate, for example, the positive electrode active material, the conductive agent, the binder, and any other constituent, are dispersed in a solvent (for example, N-methylpyrrolidone) to form a positive electrode slurry; and the positive electrode slurry is applied onto the positive electrode current collector, followed by processes such as drying and cold pressing to obtain the positive electrode plate.

### [Negative electrode plate]

A negative electrode plate includes a negative electrode current collector and a negative electrode film layer disposed on at least one surface of the negative electrode current collector, and the negative electrode film layer includes a negative electrode active material.

For example, the negative electrode current collector includes two opposite surfaces in its thickness direction, and the negative electrode film layer is disposed on either or both of the two opposite surfaces of the negative electrode current collector.

In some embodiments, the negative electrode current collector may be a metal foil current collector or a composite current collector. For example, a copper foil may be used as the metal foil. The composite current collector may include a polymer material matrix and a metal layer formed on at least one surface of the polymer material matrix. The composite current collector may be formed by forming a metal material (copper, copper alloy, nickel, nickel alloy, titanium, titanium alloy, silver, silver alloy, or the like) on a polymer material matrix (for example, matrices of polypropylene (PP), polyethylene terephthalate (PET), polybutylene terephthalate (PBT), polystyrene (PS), and polyethylene (PE)).

In some embodiments, the negative electrode active material may be a well-known negative electrode active material used for batteries in the art. For example, the negative electrode active material may include at least one of the following materials: artificial graphite, natural graphite, soft carbon, hard carbon, a silicon-based material, a tin-based material, lithium titanate, and the like. The silicon-based material may be selected from at least one of elemental silicon, silicon-oxygen compound, silicon-carbon composite, silicon-nitrogen composite, and silicon alloy. The tin-based material may be selected from at least one of elemental tin, tin-oxygen compound, and tin alloy. However, this application is not limited to these materials, but may use other conventional materials that can be used as negative electrode active materials for batteries instead. One of these negative electrode active materials may be used alone, or two or more of them may be used in combination.

In some embodiments, the negative electrode film layer further optionally includes a binder. For example, the binder may be selected from at least one of styrene-butadiene rubber (SBR), polyacrylic acid (PAA), polyacrylic acid sodium (PAAS), polyacrylamide (PAM), polyvinyl alcohol (PVA), sodium alginate (SA), polymethacrylic acid (PMAA), and carboxymethyl chitosan (CMCS).

In some embodiments, the negative electrode film layer further optionally includes a conductive agent. For example, the conductive agent may be selected from at least one of superconducting carbon, acetylene black, carbon black, Ketjen black, carbon dots, carbon nanotubes, graphene, and carbon nanofiber.

In some embodiments, the negative electrode film layer further optionally includes other promoters such as a thickener (for example, sodium carboxymethyl cellulose (CMC-Na)).

In some embodiments, the negative electrode plate may be prepared in the following manner: the constituents used for preparing the negative electrode plate, for example, the negative electrode active material, the conductive agent, the binder, and any other constituent, are dispersed in a solvent (for example, deionized water) to form a negative electrode slurry; and the negative electrode slurry is applied onto the negative electrode current collector, followed by processes such as drying and cold pressing to obtain the negative electrode plate.

### [Separator]

In some embodiments, the secondary battery further includes a separator. The separator is not limited to any particular type in this application, and may be any well-known porous separator with good chemical stability and mechanical stability.

In some embodiments, a material of the separator may be selected from at least one of glass fiber, non-woven fabric, polyethylene, polypropylene, and polyvinylidene fluoride. The separator may be a single-layer film or a multi-layer composite film, and is not particularly limited. When the separator is a multi-layer composite film, all layers may be made of same or different materials, which is not particularly limited.

In some embodiments, the positive electrode plate, the negative electrode plate, and the separator may be made into an electrode assembly through winding or lamination.

In some embodiments, the secondary battery may include an outer package. The outer package may be used for packaging the electrode assembly and the electrolyte.

In some embodiments, the outer package of the secondary battery may be a hard shell, for example, a hard plastic shell, an aluminum shell, or a steel shell. The outer package of the secondary battery may alternatively be a soft pack, for example, a soft pouch. A material of the soft pack may be plastic. As the plastic, polypropylene, polybutylene terephthalate, polybutylene succinate, and the like may be listed.

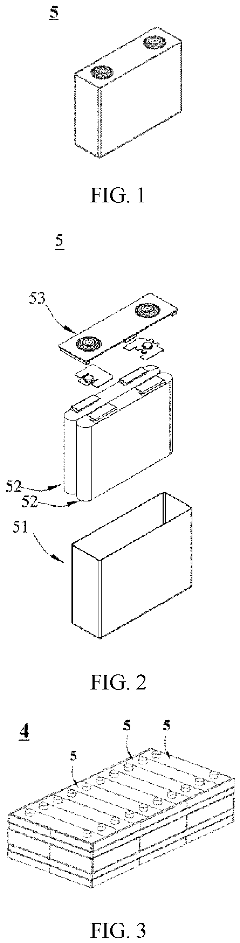

The secondary battery is not limited to any specific shape in this application, and the secondary battery may be cylindrical, rectangular, or of any other shape. For example, FIG. 1 shows a rectangular secondary battery 5 as an example.

In some embodiments, referring to FIG. 2, the outer package may include a housing 51 and a cover plate 53. The housing 51 may include a base plate and a side plate connected onto the base plate, where the base plate and the side plate enclose an accommodating cavity. The housing 51 has an opening communicating with the accommodating cavity, and the cover plate 53 can cover the opening to close the accommodating cavity. The positive electrode plate, the negative electrode plate, and the separator may be made into an electrode assembly 52 through winding or lamination. The electrode assembly 52 is packaged in the accommodating cavity. The electrolyte infiltrates the electrode assembly 52. The secondary battery 5 may include one or more electrode assemblies 52, and persons skilled in the art may make choices according to actual requirements.

In some embodiments, the secondary battery may be assembled into a battery module, and the battery module may include one or more secondary batteries. The specific quantity may be chosen by persons skilled in the art according to use and capacity of the battery module.

FIG. 3 shows a battery module 4 as an example. Referring to FIG. 3, in the battery module 4, a plurality of secondary batteries 5 may be sequentially arranged along a length direction of the battery module 4. Certainly, the batteries may alternatively be arranged in any other manners. Further, the plurality of secondary batteries 5 may be fixed by fasteners.

Optionally, the battery module 4 may further include an enclosure with an accommodating space, and the plurality of secondary batteries 5 are accommodated in the accommodating space.

In some embodiments, the battery module may be further assembled into a battery pack, and the battery pack may include one or more battery modules. The specific quantity may be chosen by persons skilled in the art according to use and capacity of the battery pack.

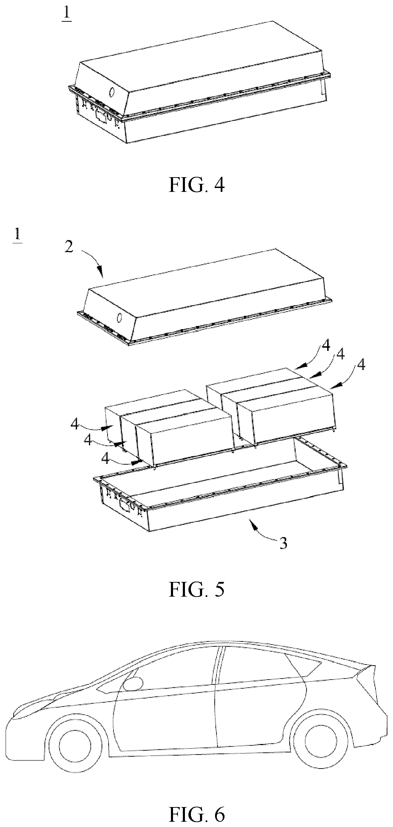

FIG. 4 and FIG. 5 show a battery pack 1 as an example. Referring to FIG. 4 and FIG. 5, the battery pack 1 may include a battery box and a plurality of battery modules 4 arranged in the battery box. The battery box includes an upper box body 2 and a lower box body 3. The upper box body 2 can be engaged with the lower box body 3 to form an enclosed space for accommodating the battery modules 4. The plurality of battery modules 4 may be arranged in the battery box in any manner.

In addition, this application further provides an electric apparatus. The electric apparatus includes at least one of the secondary battery, the battery module, or the battery pack provided in this application. The secondary battery, the battery module, or the battery pack may be used as a power source for the electric apparatus or an energy storage unit of the electric apparatus. The electric apparatus may include a mobile device (for example, a mobile phone or a notebook computer), an electric vehicle (for example, a battery electric vehicle, a hybrid electric vehicle, a plug-in hybrid electric vehicle, an electric bicycle, an electric scooter, an electric golf vehicle, or an electric truck), an electric train, a ship, a satellite system, an energy storage system, or the like, but is not limited thereto.

The secondary battery, the battery module, or the battery pack may be selected for the electric apparatus based on requirements for using the electric apparatus.

FIG. 6 shows an electric apparatus as an example. This electric apparatus is a battery electric vehicle, a hybrid electric vehicle, a plug-in hybrid electric vehicle, or the like. To satisfy requirements of the electric apparatus for high power and high energy density of the secondary battery, a battery pack or a battery module may be used.

### [Examples]

The following describes examples of this application. The examples described below are illustrative and only used for explaining this application, and cannot be construed as limitations on this application. Examples whose technical solutions or conditions are not specified are made in accordance with technical solutions or conditions described in literature in the field or made in accordance with product instructions. The reagents or instruments used are all conventional products that are commercially available if no manufacturer is indicated.

The first solvent is selected from the following solvents:

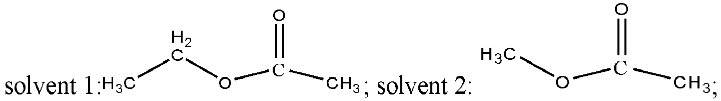

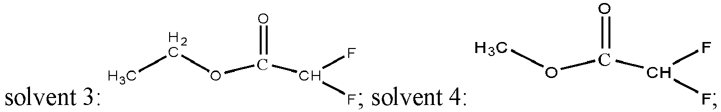

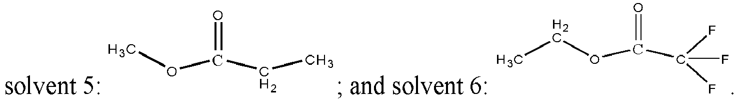

The first additive is selected from the following compounds: 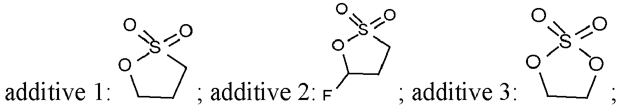 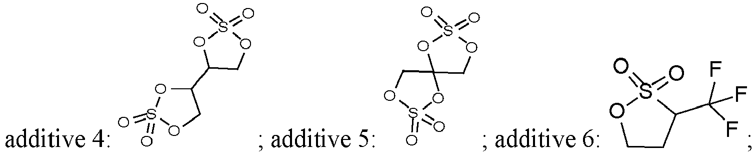 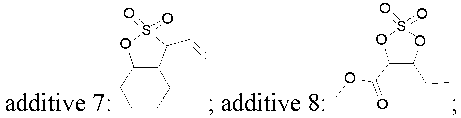 and

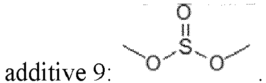

### Preparation of positive electrode active material

### Preparation example 1

### (1) Preparation of positive electrode active material

**Preparation of doped manganese oxalate:** 1.3 mol of MnSO₄·H₂O and 0.7 mol of FeSO₄·H₂O were well mixed in a mixer for 6 hours. The resulting mixture was transferred into a reactor, and 10 L of deionized water and 2 mol of oxalic acid dihydrate (denoted as oxalic acid) were added. The reactor was heated to 80°C, and stirring was performed for 6 hours at a rotation speed of 600 rpm until the reaction ended (no bubbles were generated), to obtain an Fe-doped manganese oxalate suspension. The suspension was then filtered and the resulting filter cake was dried at 120°C and then ground to obtain Fe-doped manganese oxalate particles with a median particle size Dᵥ50 of about 100 nm.

**Preparation of doped lithium manganese phosphate:** 1 mol of the manganese oxalate particles, 0.497 mol of lithium carbonate, 0.001 mol of Mo(SO₄)₃, an aqueous phosphoric acid solution containing 0.999 mol of phosphoric acid with a concentration of 85%, 0.001 mol of H₄SiO₄, 0.0005 mol of NH₄HF₂, and 0.005 mol of sucrose were added to 20 L of deionized water. The resulting mixture was transferred to a sand mill and fully ground and stirred for 10 hours to obtain a slurry. The slurry was transferred to a spray drying device for spray drying and granulation, with the drying temperature set to 250°C and the drying time set to 4 hours, to obtain particles. In a protective atmosphere of nitrogen (90vol%) + hydrogen (10vol%), the powder material was sintered at 700°C for 10 hours to obtain Li_{0.994}Mo_{0.001}Mn_{0.65}Fe_{0.35}P_{0.999}Si_{0.001}O_{3.999}F_{0.001} coated with carbon. The proportions of elements in the positive electrode active material could be tested by using inductively coupled plasma atomic emission spectrometry (ICP).

### Preparation example 2

This example was the same as preparation example 1 except that in "(1) preparation of positive electrode active material", the amount of high-purity Li₂CO₃ was changed to 0.4885 mol, M_{O}(SO₄)₃ was replaced with MgSO₄, and the amount of FeSO₄·H₂O was changed to 0.68 mol, and that during preparation of doped manganese oxalate, 0.02 mol of Ti(SO₄)₂ was also added and H₄SiO₄ was changed to HNO₃.

### Preparation example 3

This example was the same as preparation example 1 except that in "(1) preparation of positive electrode active material", the amount of high-purity Li₂CO₃ was changed to 0.496 mol, M_{O}(SO₄)₃ was replaced with W(SO₄)₃, and H₄SiO₄ was replaced with H₂SO₄.

### Preparation example 4

This example was the same as preparation example 1 except that in "(1) preparation of positive electrode active material", the amount of high-purity Li₂CO₃ was changed to 0.4985 mol, 0.001 mol of M_{O}(SO₄)₃ was replaced with 0.0005 mol of Al₂(SO₄)₃, and NH₄HF₂ was replaced with NH₄HCl₂.

### Preparation example 5

This example was the same as preparation example 1 except that in "(1) preparation of positive electrode active material", the amount of FeSO₄·H₂O was changed from 0.7 mol to 0.69 mol, and that during preparation of doped manganese oxalate, 0.01 mol of VCl₂ was also added, the amount of Li₂CO₃ was changed to 0.4965 mol, 0.001 mol of M_{O}(SO₄)₃ was replaced with 0.0005 mol of Nb₂(SO₄)₅, and H₄SiO₄ was replaced with H₂SO₄.

### Preparation example 6

This example was the same as preparation example 1 except that in "(1) preparation of positive electrode active material", the amount of FeSO₄·H₂O was changed to 0.68 mol, and that during preparation of doped manganese oxalate, 0.01 mol of VCl₂ and 0.01mol of MgSO₄ were also added, the amount of Li₂CO₃ was changed to 0.4965 mol, 0.001 mol of M_{O}(SO₄)₃ was replaced with 0.0005 mol of Nb₂(SO₄)₅, and H₄SiO₄ was replaced with H₂SO₄.

### Preparation example 7

This example was the same as preparation example 6 except that in "(1) preparation of positive electrode active material", MgSO₄ was replaced with CoSO₄.

### Preparation example 8

This example was the same as preparation example 6 except that in "(1) preparation of positive electrode active material", MgSO₄ was replaced with NiSO₄.

### Preparation example 9

This example was the same as preparation example 1 except that in "(1) preparation of positive electrode active material", the amount of FeSO₄·H₂O was changed to 0.698 mol, and that during preparation of doped manganese oxalate, 0.002 mol of Ti(SO₄)₂ was also added, the amount ofLi₂CO₃ was changed to 0.4955 mol, 0.001 mol of M_{O}(SO₄)₃ was replaced with 0.0005 mol of Nb₂(SO₄)₅, H₄SiO₄ was replaced with H₂SO₄, and NH₄HF₂ was replaced with NH₄HCl₂.

### Preparation example 10

This example was the same as preparation example 1 except that in "(1) preparation of positive electrode active material", the amount of FeSO₄·H₂O was changed to 0.68 mol, and that during preparation of doped manganese oxalate, 0.01 mol of VCl₂ and 0.01 mol of MgSO₄ were also added, the amount of Li₂CO₃ was changed to 0.4975 mol, 0.001 mol of M_{O}(SO₄)₃ was replaced with 0.0005 mol of Nb₂(SO₄)₅, and NH₄HF₂ was replaced with NH₄HBr₂.

### Preparation example 11

This example was the same as preparation example 1 except that in "(1) preparation of positive electrode active material", the amount of FeSO₄·H₂O was changed to 0.69 mol, and that during preparation of doped manganese oxalate, 0.01 mol of VCl₂ was also added, the amount of Li₂CO₃ was changed to 0.499 mol, Mo(SO₄)₃ was replaced with MgSO₄, and NH₄HF₂ was replaced with NH₄HBr₂.

### Preparation example 12

This example was the same as preparation example 1 except that in "(1) preparation of positive electrode active material", the amount of MnSO₄·H₂O was changed to 1.36 mol, and the amount of FeSO₄·H₂O was changed to 0.6 mol, and that during preparation of doped manganese oxalate, 0.04 mol of VCl2 was also added, the amount of Li₂CO₃ was changed to 0.4985 mol, M_{O}(SO₄)₃ was replaced with MgSO₄, and H₄SiO₄ was replaced with HNO₃.

### Preparation example 13

This example was the same as preparation example 12 except that in "(1) preparation of positive electrode active material", the amount of MnSO₄·H₂O was changed to 1.16 mol, and the amount of FeSO₄·H₂O was changed to 0.8 mol.

### Preparation example 14

This example was the same as preparation example 12 except that in "(1) preparation of positive electrode active material", the amount of MnSO₄·H₂O was changed to 1.3 mol, and the amount of VCl₂ was changed to 0.1 mol.

### Preparation example 15

This example was the same as preparation example 1 except that in "(1) preparation of positive electrode active material", the amount of MnSO₄·H₂O was changed to 1.2 mol, and that during preparation of doped manganese oxalate, 0.1 mol of VCl₂ was also added, the amount of Li₂CO₃ was changed to 0.494 mol, 0.001 mol of M_{O}(SO₄)₃ was replaced with 0.005 mol of MgSO₄, and H₄SiO₄ was replaced with H₂SO₄.

### Preparation example 16

This example was the same as preparation example 1 except that in "(1) preparation of positive electrode active material", the amount of MnSO₄·H₂O was changed to 1.2 mol, and that during preparation of doped manganese oxalate, 0.1 mol of VCl₂ was also added, the amount of Li₂CO₃ was changed to 0.467 mol, 0.001 mol of M_{O}(SO₄)₃ was replaced with 0.005 mol of MgSO₄, 0.001 mol of H₄SiO₄ was replaced with 0.005 mol of H₂SO₄, and the amount of phosphoric acid with a concentration of 85% was changed from 1.175 mol to 1.171 mol.

### Preparation example 17

This example was the same as preparation example 1 except that in "(1) preparation of positive electrode active material", the amount of MnSO₄·H₂O was changed to 1.2 mol, and that during preparation of doped manganese oxalate, 0.1 mol of VCl₂ was also added, the amount of Li₂CO₃ was changed to 0.492 mol, 0.001 mol of M_{O}(SO₄)₃ was replaced with 0.005 mol of MgSO₄, H₄SiO₄ was replaced with H₂SO₄, and the amount of NH₄HF₂ was changed from 0.0005 mol to 0.0025 mol.

### Preparation example 18

This example was the same as preparation example 1 except that in "(1) preparation of positive electrode active material", the amount of FeSO₄·H₂O was changed to 0.5 mol, and that during preparation of doped manganese oxalate, 0.1 mol of VCl₂ and 0.1 mol of CoSO₄ were also added, the amount of Li₂CO₃ was changed to 0.492 mol, 0.001 mol of M_{O}(SO₄)₃ was replaced with 0.005 mol of MgSO₄, H₄SiO₄ was replaced with H₂SO₄, and the amount of NH₄HF₂ was changed from 0.0005 mol to 0.0025 mol.

### Preparation example 19

This example was the same as preparation example 18 except that in "(1) preparation of positive electrode active material", the amount of FeSO₄·H₂O was changed to 0.4 mol, and the amount of CoSO₄ was changed from 0.1 mol to 0.2 mol.

### Preparation example 20

This example was the same as preparation example 18 except that in "(1) preparation of positive electrode active material", the amount of MnSO₄·H₂O was changed to 1.5 mol, the amount of FeSO₄·H₂O was changed to 0.1 mol, and the amount of CoSO₄ was changed to 0.3 mol.

### Preparation example 21

This example was the same as preparation example 18 except that in "(1) preparation of positive electrode active material", 0.1 mol of CoSO₄ was replaced with 0.1 mol of NiSO₄.

### Preparation example 22

This example was the same as preparation example 18 except that in "(1) preparation of positive electrode active material", the amount of MnSO₄·H₂O was changed to 1.5 mol, the amount of FeSO₄·H₂O was changed to 0.2 mol, and 0.1 mol of CoSO₄ was replaced with 0.2 mol of NiSO₄.

### Preparation example 23

This example was the same as preparation example 18 except that in "(1) preparation of positive electrode active material", the amount of MnSO₄·H₂O was changed to 1.4 mol, the amount of FeSO₄·H₂O was changed to 0.3 mol, and the amount of CoSO₄ was changed to 0.2 mol.

### Preparation example 24

This example was the same as preparation example 1 except that in "(1) preparation of positive electrode active material", the amount of MnSO₄·H₂O was changed from 1.3 mol to 1.2 mol, and the amount of FeSO₄·H₂O was changed from 0.7 mol to 0.5 mol, and that during preparation of doped manganese oxalate, 0.1 mol of VCl₂ and 0.2 mol of CoSO₄ were also added, the amount of Li₂CO₃ was changed to 0.497 mol, 0.001 mol of Mo(SO₄)₃ was replaced with 0.005 mol of MgSO₄, H₄SiO₄ was replaced with H₂SO₄, and the amount of NH₄HF₂ was changed from 0.0005 mol to 0.0025 mol.

### Preparation example 25

This example was the same as preparation example 18 except that in "(1) preparation of positive electrode active material", the amount of MnSO₄·H₂O was changed to 1.0 mol, the amount of FeSO₄·H₂O was changed to 0.7 mol, and the amount of CoSO₄ was changed to 0.2 mol.

### Preparation example 26

This example was the same as preparation example 1 except that in "(1) preparation of positive electrode active material", the amount of MnSO₄·H₂O was changed to 1.4 mol, and the amount of FeSO₄·H₂O was changed to 0.3 mol, and that during preparation of doped manganese oxalate, 0.1 mol of VCl₂ and 0.2 mol of CoSO₄ were also added, the amount of Li₂CO₃ was changed to 0.4825 mol, 0.001 mol of M_{O}(SO₄)₃ was replaced with 0.005 mol of MgSO₄, the amount of H₄SiO₄ was changed to 0.1 mol, the amount of phosphoric acid was changed to 0.9 mol, and the amount of NH₄HF₂ was changed to 0.04 mol.

### Preparation example 27

This example was the same as preparation example 1 except that in "(1) preparation of positive electrode active material", the amount of MnSO₄·H₂O was changed to 1.4 mol, the amount of FeSO₄·H₂O was changed to 0.3 mol, and that during preparation of doped manganese oxalate, 0.1 mol of VCl₂ and 0.2 mol of CoSO₄ were also added, the amount of Li₂CO₃ was changed to 0.485 mol, 0.001 mol of M_{O}(SO₄)₃ was replaced with 0.005 mol of MgSO₄, the amount of H₄SiO₄ was changed to 0.08 mol, the amount of phosphoric acid was changed to 0.92 mol, and the amount of NH₄HF₂ was changed to 0.05 mol.

### Comparative preparation example 1

**Preparation of manganese oxalate:** 1mol of MnSO₄·H₂O was added into a reactor, and 10 L of deionized water and 1mol of oxalic acid dihydrate (denoted as oxalic acid) were added. The reactor was heated to 80°C, and stirring was performed for 6 hours at a rotation speed of 600 rpm until the reaction ended (no bubbles were generated), to obtain a manganese oxalate suspension. The suspension was then filtered and the resulting filter cake was dried at 120°C and then ground to obtain manganese oxalate particles with a median particle size Dᵥ50 ranging from 50 nm to 200 nm.

**Preparation of lithium manganese phosphate:** 1 mol of the manganese oxalate particles, 0.5 mol of lithium carbonate, an aqueous phosphoric acid solution containing 1 mol of phosphoric acid with a concentration of 85%, and 0.005 mol of sucrose were added to 20 L of deionized water. The resulting mixture was transferred to a sand mill and fully ground and stirred for 10 hours to obtain a slurry. The slurry was transferred to a spray drying device for spray drying and granulation, with the drying temperature set to 250°C and the drying time set to 4 hours, to obtain particles. In a protective atmosphere of nitrogen (90vol%) + hydrogen (10vol%), the powder material was sintered at 700°C for 10 hours to obtain LiMnPO₄ coated with carbon.

### Comparative preparation example 2

This example was the same as comparative preparation example 1 except that 1 mol of MnSO₄·H₂O in comparative preparation example 1 was replaced with 0.85 mol of MnSO₄·H₂O and 0.15 mol of FeSO₄·H₂O, and these materials were added into a mixer and well mixed for 6 hours and then added into a reactor.

### Comparative preparation example 3

This example was the same as preparation example 1 except that in "(1) preparation of positive electrode active material", the amount of MnSO₄·H₂O was changed to 1.9 mol, 0.7 mol of FeSO₄.H₂O was replaced with 0.1 mol of ZnSO₄, the amount of Li₂CO₃ was changed to 0.495 mol, 0.001 mol of M_{O}(SO₄)₃ was replaced with 0.005 mol of MgSO₄, the amount of phosphoric acid was changed to 1 mol, and neither H₄SiO₄ nor NH₄HF₂ was added.

### Comparative preparation example 4

This example was the same as preparation example 1 except that in "(1) preparation of positive electrode active material", the amount of MnSO₄·H₂O was changed to 1.2 mol, the amount of FeSO₄·H₂O was changed to 0.8 mol, the amount of Li₂CO₃ was changed to 0.45 mol, 0.001 mol of M_{O}(SO₄)₃ was replaced with 0.005 mol of Nb₂(SO₄)₅, the amount of phosphoric acid was changed from 0.999 mol to 1 mol, the amount of NH₄HF₂ was changed from 0.0005 mol to 0.025 mol, and no H₄SiO₄ was added.

### Comparative preparation example 5

This example was the same as preparation example 1 except that in "(1) preparation of positive electrode active material", the amount of MnSO₄·H₂O was changed to 1.4 mol, the amount of FeSO₄·H₂O was changed to 0.6 mol, the amount of Li₂CO₃ was changed to 0.38 mol, and 0.001 mol of M_{O}(SO₄)₃ was replaced with 0.12 mol of MgSO₄.

### Comparative preparation example 6

This example was the same as preparation example 1 except that in "(1) preparation of positive electrode active material", the amount of MnSO₄·H₂O was changed to 0.8 mol, 0.7 mol of FeSO₄·H₂O was replaced with 1.2 mol of ZnSO₄, the amount of Li₂CO₃ was changed to 0.499 mol, and 0.001 mol of M_{O}(SO₄)₃ was replaced with 0.001 mol of MgSO₄.

### Comparative preparation example 7

This example was the same as preparation example 1 except that in "(1) preparation of positive electrode active material", the amount of MnSO₄·H₂O was changed to 1.4 mol, the amount of FeSO₄·H₂O was changed to 0.6 mol, the amount of Li₂CO₃ was changed to 0.534 mol, 0.001 mol of M_{O}(SO₄)₃ was replaced with 0.001 mol of MgSO₄, the amount of phosphoric acid was changed to 0.88 mol, the amount of H₄SiO₄ was changed to 0.12 mol, and the amount of NH₄HF₂ was changed to 0.025 mol.

### Comparative preparation example 8

This example was the same as preparation example 1 except that in "(1) preparation of positive electrode active material", the amount of MnSO₄·H₂O was changed to 1.2 mol, the amount of FeSO₄·H₂O was changed to 0.8 mol, the amount of Li₂CO₃ was changed to 0.474 mol, 0.001 mol of M_{O}(SO₄)₃ was replaced with 0.001 mol of MgSO₄, the amount of phosphoric acid was changed to 0.93 mol, the amount of H₄SiO₄ was changed to 0.07 mol, and the amount of NH₄HF₂ was changed to 0.06 mol.

### II. Preparation of battery

### (1) Preparation of button cell

The positive electrode active material, polyvinylidene fluoride (PVDF), and acetylene black were added at a weight ratio of 90:5:5 to N-methylpyrrolidone (NMP), and stirred in a drying room to obtain a slurry. The slurry was applied onto an aluminum foil, followed by drying and cold pressing to obtain a positive electrode plate. The application amount was 0.2 g/cm², and the compacted density was 2.0 g/cm³.

A lithium sheet used as a negative electrode, a solution containing ethylene carbonate (EC), diethyl carbonate (DEC), and dimethyl carbonate (DMC) at a volume ratio of 1:1:1 and 1 mol/L LiPF₆ used as an electrolyte, and the prepared positive electrode plate were assembled together in a button cell box to form a button cell (also referred to as "button battery" hereafter), where an injection factor of the button battery was 3.5 g/mAh.

### (2) Preparation of full cell

The positive electrode active material, a conductive agent acetylene black, and a binder polyvinylidene difluoride (PVDF) were well mixed at a weight ratio of 92:2.5:5.5 in an N-methylpyrrolidone solvent system, and then the resulting mixture was applied onto an aluminum foil, followed by drying and cold pressing to obtain a positive electrode plate. An application amount was 0.4 g/cm², and a compacted density was 2.4 g/cm³.

A negative electrode active material artificial graphite, hard carbon, a conductive agent acetylene black, a binder styrene-butadiene rubber (SBR), and a thickener sodium carboxymethyl cellulose (CMC) were well mixed at a weight ratio of 90:5:2:2:1 in deionized water, and then the resulting mixture was applied onto a copper foil, followed by drying and cold pressing to obtain a negative electrode plate. An application amount was 0.2 g/cm², and a compacted density was 1.7 g/cm'.

A polyethylene (PE) porous polymeric film was used as a separator; the positive electrode plate, the separator, and the negative electrode plate were stacked in sequence, so that the separator was located between the positive electrode plate and the negative electrode plate for separation; and the resulting stack was wound to obtain a bare cell. The bare cell was placed in an outer package, an electrolyte that was the same as the electrolyte used during preparation of the button battery was injected, and the outer package was sealed to obtain a full cell (also referred to as "full battery" hereinafter), where an injection factor of the full battery was 3.5 g/mAh.

### III. Test methods for positive electrode active material properties and battery performance

### 1. Test method for lattice change rate

At a constant temperature of 25°C, the positive electrode active material samples were placed in an XRD instrument (model: Bruker D8 Discover), and the samples were tested at 1°/min. The test data were organized and analyzed, and the lattice constants a0, b0, c0, and v0 (where a0, b0, and c0 represented the lengths of faces of the unit cell, and v0 denoted the volume of the unit cell, which could be obtained directly from XRD refinement results) at that time point were calculated with reference to the standard PDF card.

The positive electrode active material samples were prepared into button batteries using the preparation method of button battery in the foregoing example, and the button batteries were charged at a small rate of 0.05C until the current was reduced to 0.01C. The positive electrode plate was then taken out from the button battery and placed in DMC for 8 hours, then dried, and scraped for powder, and particles with a particle size less than 500 nm were sifted out from the powder. Samples were taken and subjected to the same way as the fresh samples under test above to calculate their lattice constants v1, and (v0-v1)/v0×100% was taken as their lattice change rates before and after complete deintercalation or intercalation of lithium to be listed in the table.

### 2. Test method for Li/Mn antisite defect concentration

The XRD results tested in "test method for lattice change rate" were compared with the PDF (Powder Diffraction File) card of the standard crystal to obtain the Li/Mn antisite defect concentration. Specifically, the XRD results tested in "test method for lattice change rate" were imported into the general structural analysis system (GSAS) software to automatically derive the refinement results, which contained the occupancy of the different atoms, and then the Li/Mn antisite defect concentration was obtained by reading the refinement results.

### 3. Test for surface oxygen valence

5 g of the positive electrode active material sample was taken to prepare into a button battery according to the preparation method of button battery in the foregoing example. The button battery was charged at a small rate of 0.05C until the current was reduced to 0.01C. The positive electrode plate was then taken out from the button battery and placed in DMC for 8 hours, then dried, and scraped for powder, and particles with a particle size less than 500 nm were sifted out from the powder. The obtained particles were measured using electron energy loss spectroscopy (EELS; the model of the instrument used was Talos F200S) to obtain energy loss near edge structures (ELNES) that reflected the density of states and energy level distribution of elements. Based on the density of states and energy level distribution, the number of occupying electrons was calculated by integrating the data of the valence band density of states to deduce the surface oxygen valence after charging.

### 4. Test method for compacted density

5 g of the powder was taken and put in a special mold for compaction (CARVER mold, model 13 mm, USA), and then the mold was put on a compacted density instrument. A pressure of 3T was applied, the thickness of the powder under the pressure (the thickness after pressure relief) was read on the device, and the compacted density was calculated using ρ = m/v.

### 5. Measurement method for dissolution amount of Mn (as well as Fe doping at Mn site) after cycling

Full batteries cycled at 45°C until capacity faded to 80% were discharged to a cut-off voltage of 2.0 V at 0.1C. The battery was then disassembled, the negative electrode plate was removed, and 30 discs with a unit area (1540.25 mm²) were randomly taken on the negative electrode plate and tested using Agilent ICP-OES730 for inductively coupled plasma atomic emission spectroscopy (ICP). The amounts of Fe (if the Mn site of the positive electrode active material was doped with Fe) and Mn were calculated from the ICP results, so as to calculate the dissolution amount of Mn (as well as Fe doping at the Mn site) after cycling. The test standard was in accordance with EPA-6010D-2014.

### 6. Test method for initial gram capacity of button battery

The button battery was charged to 4.3 V at 0.1C under a voltage of 2.5 V to 4.3 V, then constant-voltage charged at 4.3 V to a current less than or equal to 0.05 mA, left standing for 5 min, and then discharged to 2.0 V at 0.1C, and a discharge capacity at that time point was an initial gram capacity and recorded as D0.

### 7. Test method for 3C constant current charge ratio

At a constant temperature of 25°C, new full batteries were left standing for 5 min, and then discharged to 2.5 V at 1/3C. The full batteries were left standing for 5 min, charged to 4.3 V at 1/3C, and then constant-voltage charged at 4.3 Vto a current less than or equal to 0.05 mA. The full batteries were left standing for 5 min, and a charge capacity at that time point was recorded as C0. The full batteries were discharged to 2.5 V at 1/3C, left standing for 5 min, then charged to 4.3 V at 3C, and left standing for 5 min, and a charge capacity at that time point was recorded as C1. The 3C constant current charge ratio was C1/C0×100%.

Higher 3C constant current charge ratio indicates better rate performance of the battery.

### 8. Test for cycling performance of full battery at 45°C

At a constant temperature of 45°C, the full batteries were charged to 4.3 V at 1C under a voltage of 2.5 V to 4.3 V, and then constant-voltage charged at 4.3 V to a current less than or equal to 0.05 mA. The full batteries were left standing for 5 min and then discharged to 2.5 V at 1C, and a discharge capacity at that time point was recorded as D0. The charge and discharge cycle was repeated until the discharge capacity was reduced to 80% of D0. The number of cycles the battery had undergone at that time point was recorded.

### 9. Test for swelling of full battery at 60°C

The full batteries at 100% state of charge (SOC) were stored at 60°C. The open circuit voltage (OCV) and alternating current internal resistance (IMP) of the cells were measured before, during, and after storage to monitor the SOCs, and the volumes of the cells were measured. The full batteries were taken out after every 48 h of storage and left standing for 1 h. Then the open circuit voltage (OCV) and internal resistance (IMP) were tested, and the cell volumes were tested in a drainage method after the batteries were cooled to room temperature. In the drainage method, first a scale that automatically performed unit conversion on dial data was used for separately measuring a gravity of the cell, denoted as F₁, then the cell was completely placed into deionized water (density given to be 1 g/cm³), and the gravity of the cell at that time point was measured as F₂. The buoyant force experienced by the cell, denoted as F_{buoyant}, was calculated as F₁-F₂. Then, according to Archimedes' principle, F_{buoyant}= ρ × g × V_{displaced}, the volume V of the cell could be calculated as V=(F₁-F₂)/(ρ × g).

It can be learned from the OCV and IMP test results that the batteries of all the examples always maintained an SOC of above 99% throughout the storage test.

After 30 days of storage, the cell volumes were measured and the percentage increases in the cell volumes after storage relative to the cell volumes before storage were calculated.

Positive electrode active material compositions in comparative preparation examples 1 to 8 and preparation examples 1 to 11 are given in Table 1. Performance data of the positive electrode active materials in comparative preparation examples 1 to 8 and preparation examples 1 to 11, or of button batteries or full batteries prepared using corresponding positive electrode active materials as positive electrode active materials of batteries, sequentially named as comparative example 1, comparative example 2, comparative example 3, ..., and comparative example 19, measured in the foregoing performance test methods are given in Table 2. Positive electrode active material compositions in preparation examples 12 to 27 are given in Table 3. Performance data of the positive electrode active materials in preparation examples 12 to 27, or of button batteries or full batteries prepared using corresponding positive electrode active materials as positive electrode active materials of batteries, sequentially named as comparative example 20, comparative example 21, comparative example 22, ..., and comparative example 35, measured in the foregoing performance test methods are given in Table 4.

**Table 1 Positive electrode active material compositions in preparation examples 1 to 11 and preparation examples 1 to 8**

| Preparation | Positive electrode active material |
|---|---|
| Comparative example 1 | LiMnPO₄ |
| Comparative example 2 | LiMn_{0.85}Fe_{0.15}PO₄ |
| Comparative example 3 | Li_{0.990}Mg_{0.005}Mn_{0.95}Zn_{0.05}PO₄ |
| Comparative example 4 | Li_{0.90}Nb_{0.01}Mn_{0.6}Fe_{0.4}PO_{3.95}F_{0.05} |
| Comparative example 5 | Li_{0.76}Mg_{0.12}Mn_{0.7}Fe_{0.3}P_{0.999}Si_{0.001}O_{3.999}F_{0.001} |
| Comparative example 6 | Li_{0.998}Mg_{0.001}Mn_{0.4}Zn_{0.6}P_{0.999} Si_{0.001}O_{3.999}F_{0.001} |
| Comparative example 7 | Li_{1.068}Mg_{0.001}Mn_{0.7}Fe_{0.3}P_{0.88}Si_{0.12}O_{3.95}F_{0.05} |
| Comparative example 8 | Li_{0.948}Mg_{0.001}Mn_{0.6}Fe_{0.4}P_{0.93}Si_{0.07}O_{3.88}F_{0.12} |
| Preparation example 1 | Li_{0.994}Mo_{0.001}Mn_{0.65}Fe_{0.35}P_{0.999}Si_{0.001}O_{3.999}F_{0.001} |
| Preparation example 2 | Li_{0.977}Mg_{0.001}Mn_{0.65F}e_{0.34}Ti_{0.01}P_{0.999}N_{0.001}O_{3.999}F_{0.001} |
| Preparation example 3 | Li_{0.992}W_{0.001}Mn_{0.65}Fe_{0.35}P_{0.999}S_{0.001}O_{3.999}F_{0.001} |
| Preparation example 4 | Li_{0.997}Al_{0.001}Mn_{0.65}Fe_{0.35}P_{0.999}Si_{0.001}O_{3.999}Cl_{0.001} |
| Preparation example 5 | Li_{0.993}Nb_{0.001}Mn_{0.65}Fe_{0.345}V_{0.005}P_{0.999}S_{0.001}O_{3.999}F_{0.001} |
| Preparation example 6 | Li_{0.993}Nb_{0.001}Mn_{0.65}Fe_{0.34}V_{0.005}Mg_{0.005}P_{0.999}S_{0.001}O_{3.999}F_{0.001} |
| Preparation example 7 | Li_{0.993}Nb_{0.001}Mn_{0.65}Fe_{0.34}V_{0.005}Co_{0.005}P_{0.999}S_{0.001}O_{3.999}F_{0.001} |
| Preparation example 8 | Li_{0.993}Nb_{0.001}Mn_{0.65}Fe_{0.34}V_{0.005}Ni_{0.005}P_{0.999}S_{0.001}O_{3.999}F_{0.001} |
| Preparation example 9 | Li_{0.991}Nb_{0.001}Mn_{0.65}Fe_{0.349}Ti_{0.001}P_{0.999}S_{0.001}O_{3.999}Cl_{0.001} |
| Preparation example 10 | Li_{0.995}Nb_{0.001}Mn_{0.65}Fe_{0.34}V_{0.005}Mg_{0.005}P_{0.999}Si_{0.001}O_{3.999}Br_{0.001} |
| Preparation example 11 | Li_{0.998}Mg_{0.001}Mn_{0.65}Fe_{0.345}V_{0.005}P_{0.999}Si_{0.001}O_{3.999}Br_{0.001} |

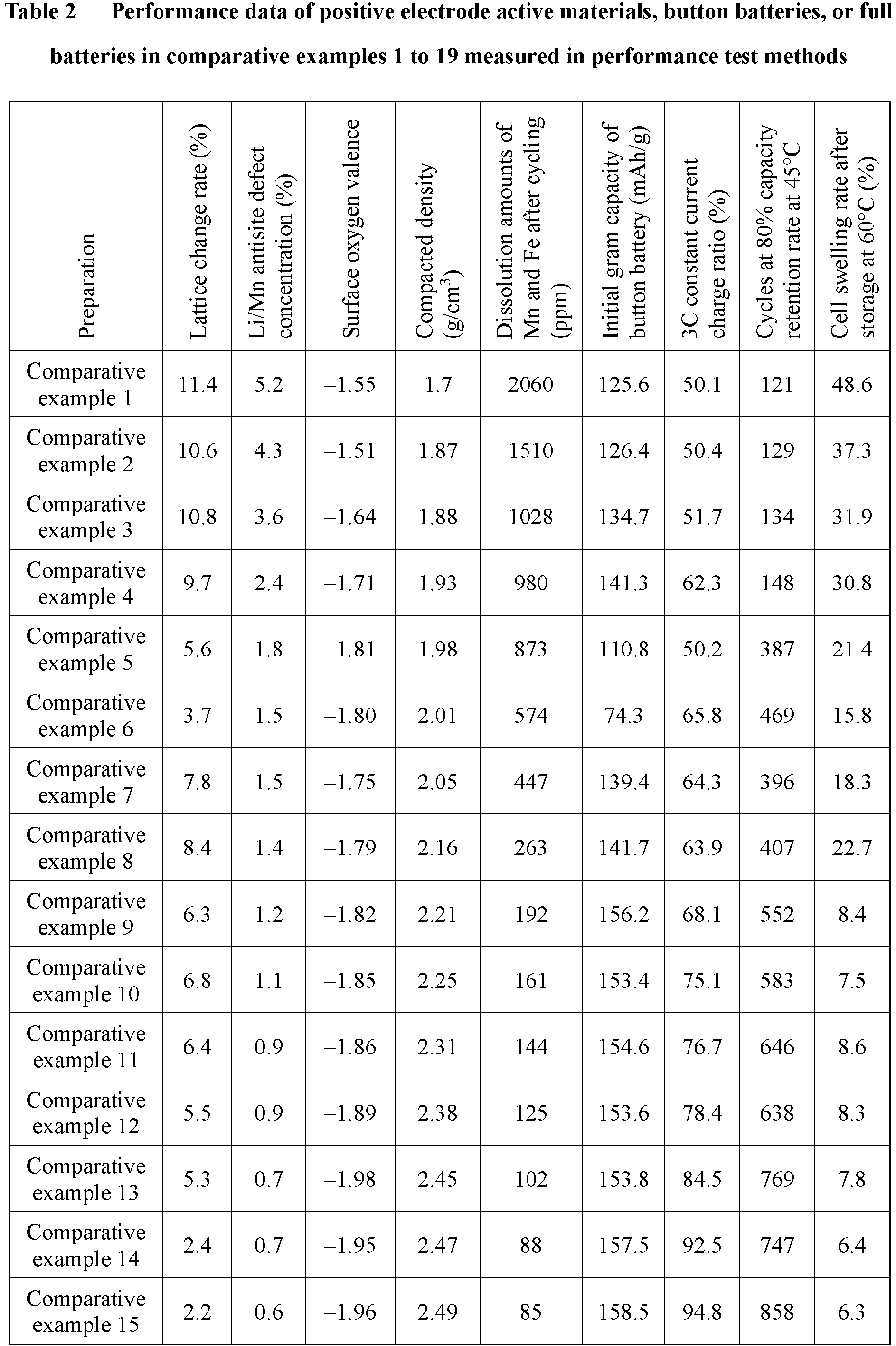

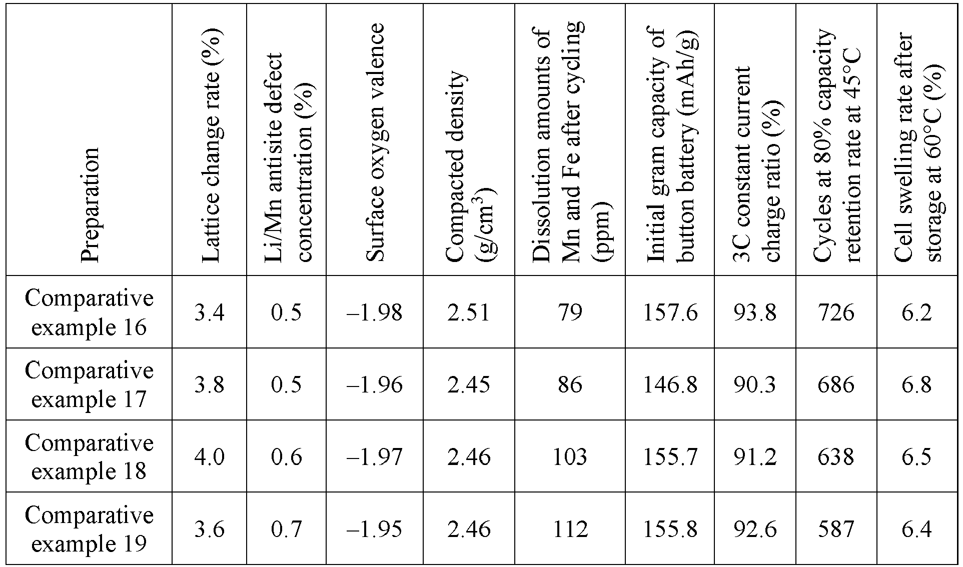

**Table 3 Positive electrode active material compositions in preparation examples 12 to 27**

| | Positive electrode active material | (1-y):y | a:x |
|---|---|---|---|
| Preparation example 12 | Li_{0.997}Mg_{0.001}Mn_{0.68}Fe_{0.3}V_{0.02}P_{0.999}N_{0.001}O_{3.999}F_{0.001} | 2.13 | 997 |
| Preparation example 13 | Li_{0.997}Mg_{0.001}Mn_{0.58}Fe_{0.4V0.02}P_{0.999}N_{0.001}O_{3.999}F_{0.001} | 1.38 | 997 |
| Preparation example 14 | Li_{0.997}Mg_{0.001}Mn_{0.65}Fe_{0.3}V_{0.05}P_{0.999}N_{0.001}O_{3.999}F_{0.001} | 1.86 | 997 |
| Preparation example 15 | Li_{0.988}Mg_{0.005}Mn_{0.6}Fe_{0.35}V_{0.05}P_{0.999}S_{0.001}O_{3.999}F_{0.001} | 1.5 | 197.6 |
| Preparation example 16 | Li_{0.984}Mg_{0.005}Mn_{0.6}Fe_{0.35}V_{0.05}P_{0.995}S_{0.005}O_{3.999}F_{0.001} | 1.5 | 196.8 |
| Preparation example 17 | Li_{0.984}Mg_{0.005}Mn_{0.6}Fe_{0.35}V_{0.05}P_{0.999}S_{0.001}O_{3.995}F_{0.005} | 1.5 | 196.8 |
| Preparation example 18 | Li_{0.984}mg_{0.005}Mn_{0.65}Fe_{0.25}V_{0.05}CO_{0.05}P_{0.999} S_{0.001}O_{3.995}F_{0.005} | 1.86 | 196.8 |
| Preparation example 19 | Li_{0.984}Mg_{0.005}Mn_{0.65}Fe_{0.25}V_{0.05}CO_{0.10}P_{0.999} S_{0.001}O_{3.995}F_{0.005} | 1.86 | 196.8 |
| Preparation example 20 | Li_{0.984}Mg_{0.005}Mn_{0.75}Fe_{0.05}V_{0.05}CO_{0.15}P_{0.999} S_{0.001}O_{3.995}F_{0.005} | 3 | 196.8 |
| Preparation example 21 | Li_{0.984}Mg_{0.005}Mn_{0.65}Fe_{0.25}V_{0.05}Ni_{0.05}P_{0.999}S_{0.001}O_{3.995}F_{0.005} | 1.86 | 196.8 |
| Preparation example 22 | Li_{0.984}Mg_{0.005}Mn_{0.75}Fe_{0.10}V_{0.05}Ni_{0.05}P_{0.999} S_{0.001}O_{3.995}F_{0.005} | 3 | 196.8 |
| Preparation example 23 | Li_{0.98}4Mg_{0.005}Mn_{0.7}Fe_{0.15}V_{0.05}Co_{0.10}P_{0.999}S_{0.001}O_{3.995}F_{0.005} | 2.33 | 196.8 |
| Preparation example 24 | Li_{0.984}Mg_{0.005}Mn_{0.6}Fe_{0.25}V_{0.05}Co_{0.10}P_{0.999}S_{0.001}O_{3.995}F_{0.005} | 1.5 | 196.8 |
| Preparation example 25 | Li_{0.984}Mg_{0.005}Mn_{0.5}Fe_{0.35}V_{0.05}CO_{0.10}P_{0.999}S_{0.001}O_{3.995}F_{0.005} | 1 | 196.8 |
| Preparation example 26 | Li_{1.01}Mg_{0.005}Mn_{0.7}Fe_{0.15}V_{0.05}Co_{0.10}P_{0.9}Si_{0.1}O_{3.92}F_{0.08} | 2.33 | 202 |
| Preparation example 27 | Li_{0.97}Mg_{0.005}Mn_{0.7}Fe_{0.15}V_{0.05}Co_{0.10}P_{0.92}Si_{0.08}O_{3.9}F_{0.1} | 2.33 | 194 |

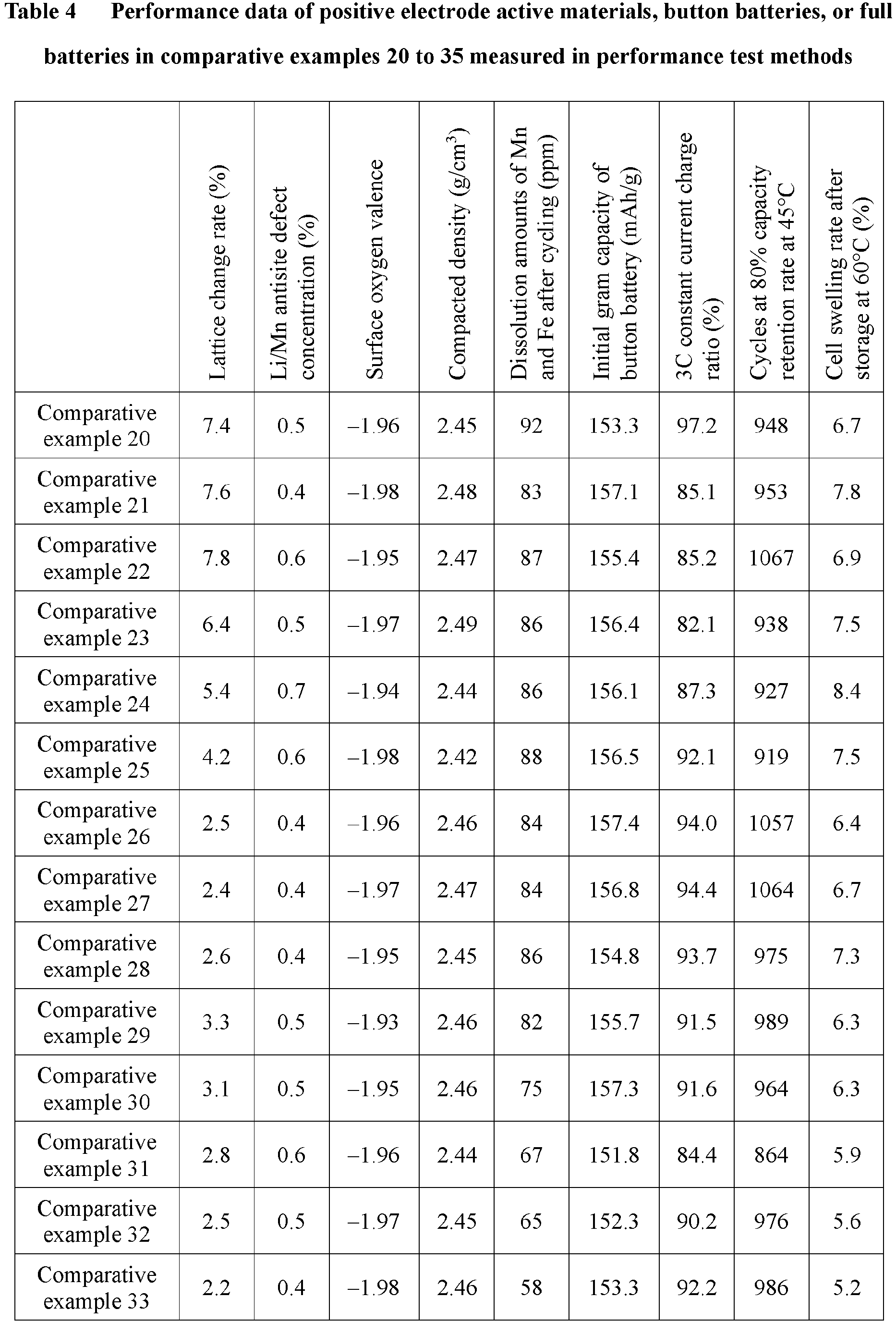

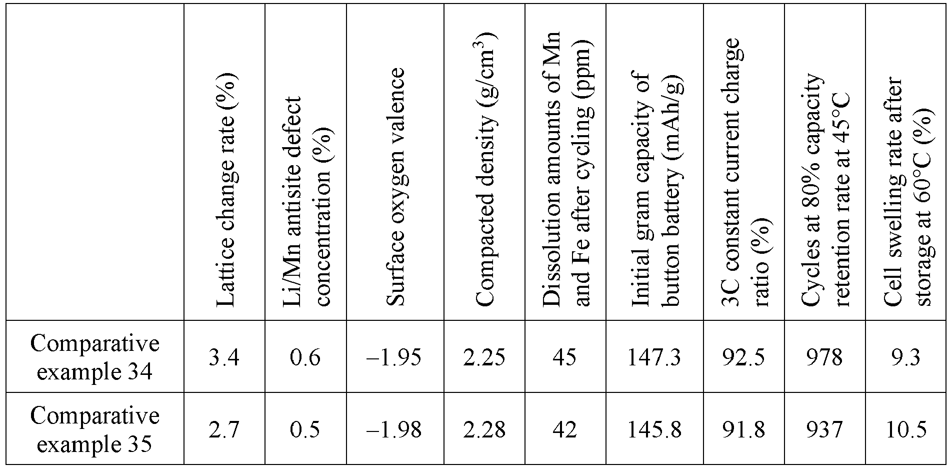

The electrolytes in comparative examples 1 to 35 were replaced with the following electrolyte, and then these examples were sequentially used as comparative examples 36 to 43 (that was, the electrolytes in comparative examples 1 to 8 were correspondingly replaced) and examples 1 to 27 (that was, the electrolytes in comparative examples 9 to 35 were correspondingly replaced).

Solvent 1 was used as the first solvent, ethylene carbonate (EC), diethyl carbonate (DEC), and dimethyl carbonate (DMC) at a volume ratio of 1:1:1 formed the second solvent, and the first solvent and the second solvent were used as solvents for the electrolyte, where a mass ratio of the first solvent to the second solvent was 1:1; LiPF₆ was used as a lithium salt in the electrolyte with a concentration of 1 mol/L; and additive 1 was as the first additive of the electrolyte with a mass percentage in the electrolyte of 3%.

The initial gram capacity of button battery (mAh/g), 3C constant current charge ratio (%), number of cycles at 80% capacity retention rate at 45°C, and cell swelling rate after storage at 60°C (%) of the batteries in comparative examples 36 to 43 and examples 1 to 27 were tested in the foregoing test methods, and the test results were recorded in Table 5.

**Table 5**

| | Initial gram capacity of button battery (mAh/g) | 3C constant current charge ratio (%) | Cycles at 80% capacity retention rate at 45°C | Cell swelling rate after storage at 60°C (%) |
|---|---|---|---|---|
| Comparative example 36 | 128.4 | 53.7 | 208 | 43.3 |
| 37 | 129.3 | 53.8 | 214 | 32.2 |
| 38 | 137.4 | 55.1 | 222 | 26.4 |
| 39 | 144.3 | 65.7 | 236 | 25.6 |
| 40 | 113.6 | 53.6 | 474 | 16.9 |
| 41 | 79.7 | 69.2 | 555 | 12.1 |
| 42 | 142.4 | 67.7 | 487 | 14.6 |
| 43 | 144.5 | 67.3 | 494 | 8.2 |
| Example 1 | 157.3 | 70.5 | 598 | 7.6 |
| 2 | 154.3 | 78.5 | 612 | 6.1 |
| 3 | 156.4 | 79.5 | 714 | 7.6 |
| 4 | 155.4 | 81.2 | 706 | 7.4 |
| 5 | 155.8 | 87.3 | 837 | 7.1 |
| 6 | 159.4 | 93.3 | 815 | 5.5 |
| 7 | 160.3 | 95.3 | 926 | 5.5 |
| 8 | 159.6 | 94.4 | 794 | 5.3 |
| 9 | 148.6 | 92.2 | 754 | 6 |
| 10 | 157.5 | 93 | 706 | 5.5 |
| 11 | 157.5 | 94.3 | 655 | 5.4 |
| 12 | 155.3 | 97.6 | 1016 | 5.9 |
| 13 | 158.8 | 87.9 | 1021 | 7.1 |
| 14 | 157.4 | 88 | 1135 | 6.1 |
| 15 | 158.5 | 84.9 | 1006 | 6.7 |
| 16 | 157.9 | 90.1 | 995 | 7.6 |
| 17 | 158.4 | 93.7 | 987 | 6.6 |
| 18 | 159.2 | 95.3 | 1125 | 5.6 |
| 19 | 158.5 | 95.9 | 1132 | 5.9 |
| 20 | 156.6 | 95.3 | 1073 | 6.1 |
| 21 | 157.4 | 93.8 | 1057 | 5.5 |
| 22 | 159.3 | 93.6 | 1032 | 5.4 |
| 23 | 153.5 | 87.2 | 932 | 5.1 |
| 24 | 154.2 | 91.8 | 1044 | 4.8 |
| 25 | 155.1 | 93.8 | 1054 | 4.5 |
| 26 | 149.1 | 94.1 | 1046 | 8.6 |
| 27 | 147.6 | 93.4 | 1005 | 9.7 |

It can be found through comparison between the data in Table 5 and the data in Tables 2 and 4 that using the composition of the electrolyte of this application can effectively improve the initial electric capacity, 3C constant current charge ratio, and cycling performance of the battery.

In addition, the composition of the electrolyte in example 21 was sequentially replaced with the compositions of the electrolytes shown in Table 6 to form examples 28 to 61. The second solvents in the electrolytes were all formed by ethylene carbonate (EC), diethyl carbonate (DEC), and dimethyl carbonate (DMC) at a volume ratio of 1:1:1, with specific amounts shown in Table 6. The percentage of the first additive referred to the mass percentage of the first additive with respect to the electrolyte, and the mass percentages of the first solvent and the second solvent were based on the sum of the masses of the first solvent and the second solvent.

**Table 6**

| | First solvent | | First additive | | Mass percentage of second solvent W2 (%) |
|---|---|---|---|---|---|
| Example | Substance | Percentage W1 (%) | Substance | Percentage W3 (%) | |
| 28 | Same as example 21 | 20 | Same as example 21 | Same as example 21 | 80 |
| 29 | | 80 | | | 20 |
| 30 | | 30 | | | 70 |
| 31 | | 70 | | | 30 |
| 32 | | 15 | | | 85 |
| 33 | | 85 | | | 15 |
| 34 | Solvent 2 | 50 | | | 50 |
| | First solvent | | First additive | | Mass percentage of second solvent W2 (%) |
| Example | Substance | Percentage W1 (%) | Substance | Percentage W3 (%) | |
| 35 | Solvent 3 | 50 | | | |
| 36 | Solvent 4 | 50 | | | |
| 37 | Solvent 5 | 50 | | | |
| 38 | Solvent 6 | 50 | | | |
| 39 | Same as example 21 | | | 0.01 | 50 |
| 40 | | | | 20 | |
| 41 | | | | 0.1 | |
| 42 | | | | 10 | |
| 43 | | | | 0.3 | |
| 44 | | | | 5 | |
| 45 | | | | 7 | |
| 46 | | | | 15 | |
| 47 | | | | 25 | |
| 48 | | | Additive 9 | Same as example 21 | |
| 49 | | | Additive 2 | | |
| 50 | | | Additive 3 | | |
| 51 | | | Additive 4 | | |
| 52 | | | Additive 5 | | |
| 53 | | | Additive 6 | | |
| 54 | | | Additive 7 | | |
| 55 | | | Additive 8 | | |
| 56 | Solvent 1 | 80 | Additive 1 | 20 | 0 |

The initial gram capacity of button battery (mAh/g), 3C constant current charge ratio (%), number of cycles at 80% capacity retention rate at 45°C, and cell swelling rate after storage at 60°C (%) were tested in the foregoing test methods, and the test results were recorded in Table 7.

**Table 7**

| Example | Initial gram capacity of button battery (mAh/g) | 3C constant current charge ratio (%) | Cycles at 80% capacity retention rate at 45°C | Cell swelling rate after storage at 60°C (%) |
|---|---|---|---|---|
| 28 | 157.5 | 91.9 | 1117 | 5.2 |
| 29 | 155.9 | 94.4 | 991 | 6.4 |
| 30 | 157.3 | 93.8 | 1055 | 5.3 |
| 31 | 156.3 | 94.0 | 1002 | 6.1 |
| 32 | 157.4 | 91.6 | 1153 | 4.9 |
| 33 | 155.9 | 94.8 | 994 | 6.8 |
| 34 | 156.9 | 94.5 | 997 | 7.2 |
| 35 | 156.2 | 93.1 | 1012 | 6.8 |
| 36 | 156.7 | 93.6 | 1023 | 7.1 |
| 37 | 157.2 | 91.8 | 1061 | 5.9 |
| 38 | 156.5 | 91.8 | 1011 | 6.4 |
| 39 | 155.8 | 92.5 | 994 | 7.3 |
| 40 | 155.9 | 92.2 | 1157 | 6.7 |
| 41 | 155.9 | 92.8 | 997 | 7.1 |
| 42 | 156.2 | 92.5 | 1105 | 6.2 |
| 43 | 155.9 | 93.1 | 1012 | 6.8 |
| 44 | 156.1 | 92.7 | 1087 | 6.5 |
| 45 | 156.5 | 92.6 | 1089 | 6.4 |
| 46 | 156.2 | 92.4 | 1123 | 5.9 |
| 47 | 153.5 | 92.1 | 1033 | 6.3 |
| 48 | 152.5 | 91.7 | 996 | 7.2 |
| 49 | 157.1 | 93.3 | 1034 | 5.7 |
| 50 | 157.3 | 93.2 | 1043 | 5.6 |
| 51 | 157.4 | 93.5 | 1053 | 5.8 |
| 52 | 156.9 | 93.4 | 1044 | 5.9 |
| 53 | 156.5 | 92.8 | 1023 | 6.1 |
| 54 | 157.2 | 91.9 | 1034 | 5.9 |
| 55 | 156.8 | 92.0 | 1041 | 5.8 |
| 56 | 155.8 | 91.8 | 1037 | 6.7 |

It can be found through comparison between the data in Table 7 and the data in comparative example 29 that the change in the amounts of the first solvent and the first additive in the electrolyte also has certain influence on the initial electric capacity, 3C constant current charge ratio, and cycling performance of the battery. For example, in example 33, with more first solvent used, although the 3C constant current charge ratio was significantly improved, that was, the rate performance of the battery was significantly improved, improvement of the cycling performance of the battery was influenced.

On the basis of the electrolyte in example 21, the second additive was further added. Table 8 shows the types of additives and the percentages of the additives in the electrolyte. The initial gram capacity of button battery (mAh/g), 3C constant current charge ratio (%), number of cycles at 80% capacity retention rate at 45°C, and cell swelling rate after storage at 60°C (%) were tested in the foregoing methods, and the test results were recorded in Table 8.

**Table 8**

| No. | First additive | | Second additive | | | Button battery gram capacity at 0.1C (mAh/g) | 3C constant current charge ratio (%) | Cycles corresponding to 80% capacity retention rate at 45°C | Battery swelling rate after 30 days of storage at 60°C (%) |
|---|---|---|---|---|---|---|---|---|---|
| | Type | W3 (%) | Type | | W4 (%) | | | | |
| Example 57 | Additive 1 | 3 | Ethylene sulfite | | 0.5 | 163.5 | 94.1 | 1298 | 5.4 |
| Example 58 | | | Methylene methane disulfonate | | | 162.3 | 94 | 1287 | 5.5 |
| Example 59 | | | Glutaronitrile | | | 161.2 | 94.3 | 1388 | 5.2 |
| Example 60 | | | Ethanedinitrile | | | 160.7 | 94.2 | 1301 | 5.4 |
| Example 61 | | | Ethoxy(pentafluoro)cyclotriphosphazene | | | 160.5 | 94.1 | 1276 | 5.3 |
| Example 62 | | | Cyclohexylbenzene | | | 158.5 | 94.3 | 1256 | 5.4 |
| Example 63 | | | Methoxy(pentafluoro)cyclotriphosphazen e | | | 158.7 | 93.9 | 1287 | 5.5 |
| Example 64 | | | Succinic anhydride | | | 158.6 | 94.1 | 1301 | 5.4 |
| Example 65 | | | Silane phosphite compound | | | 158.8 | 94.2 | 1243 | 5.4 |
| Example 66 | | | Silane phosphate compound | | | 158.7 | 94 | 1201 | 5.3 |
| Example 67 | | | Silane borate compound | | | 158.5 | 93.9 | 1243 | 5.4 |
| Example 68 | | | Glutaronitrile | | 0.01 | 159.9 | 94 | 1211 | 5.4 |
| Example 69 | | | Glutaronitrile | | 20 | 159.8 | 93.9 | 1287 | 5.5 |
| Example 70 | | | Glutaronitrile | | 0.05 | 161 | 94.1 | 1287 | 5.4 |
| Example 71 | | | Glutaronitrile | | 5 | 161.1 | 94 | 1321 | 5.3 |
| Example 72 | | | Glutaronitrile | | 0.1 | 161 | 94.2 | 1357 | 5.1 |
| Example 73 | | | Glutaronitrile | | 25 | 159 | 93.8 | 1111 | 5.5 |
| Example 74 | | | Glutaronitrile | | 0.005 | 157.2 | 93.6 | 1098 | 5.5 |

| Type | W3 (%) | | Type | | W4 (%) | | | | |
|---|---|---|---|---|---|---|---|---|---|
| Note: | | | | | | | | | |
| The silane phosphite compound in example 65 was | | | | 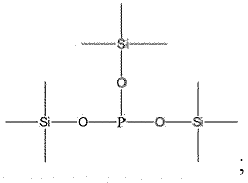 | | | | | |
| the silane phosphite compound in example 66 was | | | | 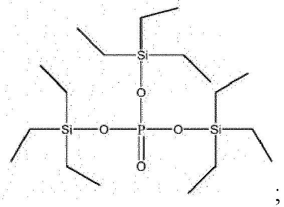 and | | | | | |
| the silane phosphite compound in example 67 was | | | | 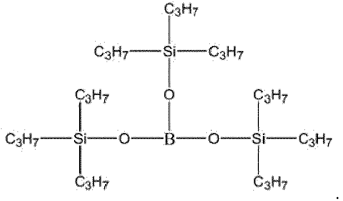 | | | | | |

It can be found through comparison between the data in Table 8 and the data in example 21 that the use of the second additive can further improve the cycling performance.

Although this application has been described with reference to some optional embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A secondary battery, comprising a positive electrode plate and a non-aqueous electrolyte, wherein
the positive electrode plate comprises a positive electrode active material, the positive electrode active material having a chemical formula of LiₐAₓMn_{1-y}B_{y}P_{1-z}C_{z}O₄₋ₙDₙ,
wherein A comprises one or more elements selected from a group consisting of Zn, Al, Na, K, Mg, Nb, Mo, and W,
B comprises one or more elements selected from a group consisting of Ti, V, Zr, Fe, Ni, Mg, Co, Ga, Sn, Sb, Nb, and Ge,
C comprises one or more elements selected from a group consisting of B (boron), S, Si, and N,
D comprises one or more elements selected from a group consisting of S, F, Cl, and Br, and
a is selected from a range of 0.9 to 1.1, x is selected from a range of 0.001 to 0.1, y is selected from a range of 0.001 to 0.5, z is selected from a range of 0.001 to 0.1, n is selected from a range of 0.001 to 0.1, and the positive electrode active material is electrically neutral; and
the non-aqueous electrolyte comprises an organic solvent, the organic solvent comprises a first solvent, and the first solvent comprises one or more of compounds represented by formula 1, 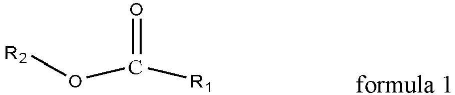
wherein R₁ and R₂ are each independently one of a C1-C10 alkyl group and a C1-C10 halogenated alkyl group, and optionally, R₁ and R₂ are each independently one of a methyl group, an ethyl group, a propyl group, a butyl group, a pentyl group, a hexyl group, a fluoromethyl group, a fluoroethyl group, a fluoropropyl group, a fluorobutyl group, a fluoropentyl group, and a fluorohexyl group.

2. The secondary battery according to claim 1, wherein the first solvent comprises at least one of the following compounds: 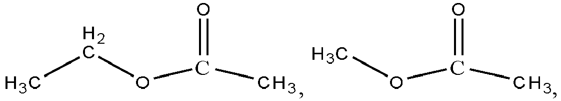 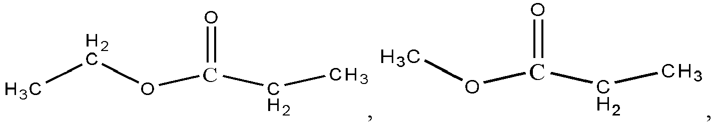 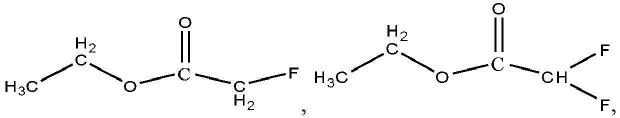 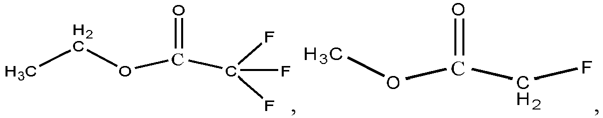 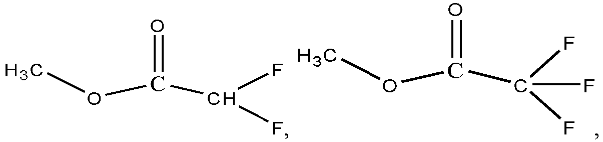 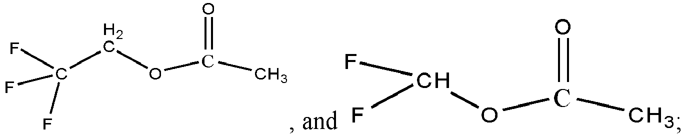 and
optionally, the first solvent comprises at least one of the following compounds:

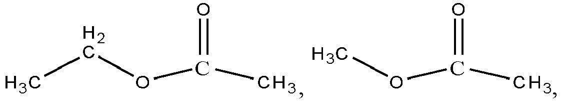

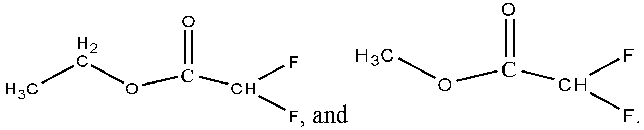

3. The secondary battery according to claim 1 or 2, wherein based on total mass of the organic solvent, a mass percentage of the first solvent is wl, wl ranging from 20% to 80%, and optionally, wl ranging from 30% to 70%; and
optionally, the non-aqueous electrolyte further comprises a second solvent, the second solvent comprising one or more from a group consisting of linear carbonate and cyclic carbonate; and further optionally, based on the total mass of the organic solvent, a mass percentage of the second solvent is w2, w2 ranging from 20% to 80%, and optionally, w2 ranging from 30% to 70%.

4. The secondary battery according to any one of claims 1 to 3, wherein the non-aqueous electrolyte further comprises a first additive, the first additive comprising one or more from a group consisting of sultone and cyclic sulfate.

5. The secondary battery according to claim 4, wherein the sultone comprises at least one of compounds represented by formula 2, 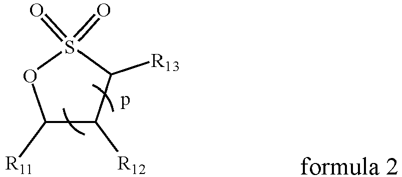
wherein p represents 1, 2, or 3;
R₁₁ represents one of a hydrogen atom, a halogen atom, a C1-C12 alkyl group, a C1-C12 halogenated alkyl group, a C1-C12 alkoxy group, and a C1-C12 halogenated alkoxy group; optionally, R₁₁ represents one of a hydrogen atom, a halogen atom, a C1-C6 alkyl group, a C1-C3 halogenated alkyl group, a C1-C3 alkoxy group, and a C1-C3 halogenated alkoxy group; and optionally, the alkoxy group is a linear alkoxy group or a cyclic alkoxy group, optionally, the cyclic alkoxy group shares a carbon atom with a parent ring of the sultone, and further optionally, the cyclic alkoxy group has 4, 5, or 6 carbon atoms;
each R₁₂ independently represents one of a hydrogen atom, a halogen atom, a C1-C12 alkyl group, a C1-C12 halogenated alkyl group, a C1-C12 alkoxy group, a C1-C12 halogenated alkoxy group, and a 4- to 7-membered sultone group, and optionally each R₁₂ independently represents one of a hydrogen atom, a halogen atom, a C1-C3 alkyl group, a C1-C3 halogenated alkyl group, a C1-C3 alkoxy group, a C1-C3 halogenated alkoxy group, and a 5- or 6-membered sultone group; and optionally, the sultone group shares a carbon atom with the parent ring of the sultone, and optionally, the sultone group is a 5-membered ring;
Rn and R₁₂ each form a 5- to 10-membered cycloalkyl group with respective carbon atoms bonded thereto; and
R₁₃ represents one of a hydrogen atom, a halogen atom, a carbonyl group, a C2-C6 ester group, a C1-C12 alkyl group, a C1-C12 halogenated alkyl group, a C2-C12 alkenyl group, a Cl-C12 alkoxy group, a C1-C12 halogenated alkoxy group, and a C6-C20 aryl group or benzyl group; and optionally, R₁₃ represents one of a hydrogen atom, a halogen atom, a carbonyl group, a C2-C3 ester group, a C1-C3 alkyl group, a C1-C3 halogenated alkyl group, a C2-C6 alkenyl group, a C1-C3 alkoxy group, a C1-C3 halogenated alkoxy group, and a C6-C10 aryl group or benzyl group;
and/or
the cyclic sulfate comprises at least one of compounds represented by formula 3, 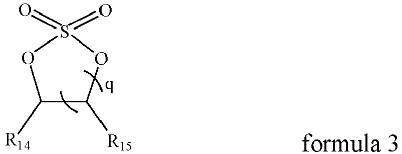
wherein q represents 1, 2, or 3;
R₁₄ represents one of a hydrogen atom, a halogen atom, a carbonyl group, a C1-C12 alkyl group, a C1-C12 halogenated alkyl group, a C2-C12 alkenyl group, a C1-C12 alkoxy group, a C1-C12 halogenated alkoxy group, a C2-C6 ester group, and a 4- to 7-membered cyclic sulfate group; optionally, R₁₄ represents one of a hydrogen atom, a halogen atom, a carbonyl group, a double bond, a C1-C6 alkyl group, a C1-C3 halogenated alkyl group, a C1-C3 alkoxy group, a C1-C3 halogenated alkoxy group, a C2-C3 ester group, and a 4- or 5-membered cyclic sulfate group; and optionally, the cyclic sulfate group shares a carbon atom with the cyclic sulfate; and
each R₁₅ independently represents one of a hydrogen atom, a halogen atom, a C1-C12 alkyl group, a C1-C12 halogenated alkyl group, a C1-C12 alkoxy group, a C1-C12 halogenated alkoxy group, and a C6-C20 aryl group; and optionally, each R₁₅ independently represents one of a hydrogen atom, a halogen atom, a C1-C6 alkyl group, a C1-C3 halogenated alkyl group, a C1-C3 alkoxy group, a C1-C3 halogenated alkoxy group, and a C6-C10 aryl group; or
R₁₄ and R₁₅ each form a 4- to 7-membered cyclic sulfate group together with respective carbon atoms bonded thereto, and further optionally, R₁₄ and R₁₅ each form a 5-membered cyclic sulfate group together with respective carbon atoms bonded thereto;
optionally, the sultone comprises at least one of the following compounds: 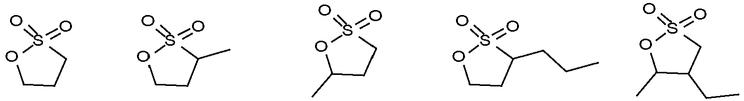 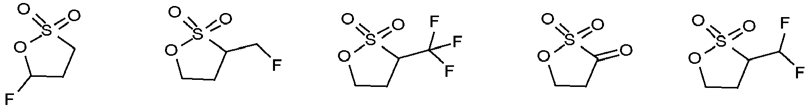 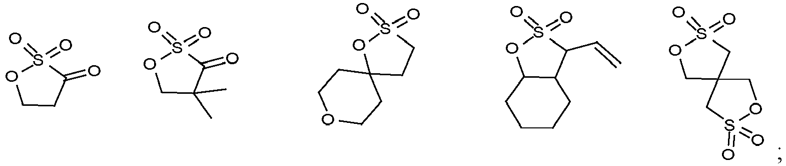
optionally, the cyclic sulfate comprises at least one of the following compounds: 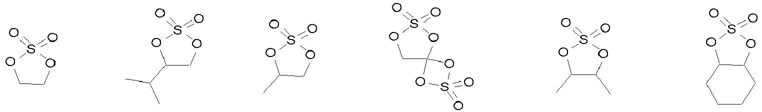 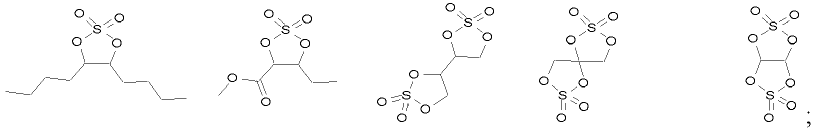
further optionally, the sultone comprises at least one of the following compounds: 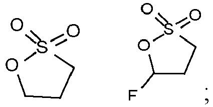 and
further optionally, the cyclic sulfate comprises at least one of the following compounds:

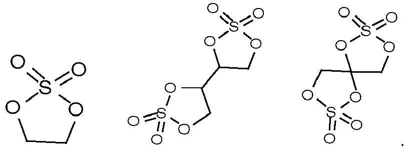

6. The secondary battery according to claim 4 or 5, wherein based on total mass of the non-aqueous electrolyte, a percentage of the first additive is W3, and 0.01% < W3 < 20%, optionally, 0.1% < W3 < 10%, and further optionally, 0.2% < W3 < 5%.

7. The secondary battery according to any one of claims 1 to 6, wherein the non-aqueous electrolyte further comprises a second additive, the second additive comprising one or more from a group consisting of a sulfite compound, a disulfonate compound, a nitrile compound, an aromatic compound, a phosphazene compound, a cyclic anhydride compound, a phosphite compound, a phosphate compound, and a borate compound.

8. The secondary battery according to claim 7, wherein based on total mass of the non-aqueous electrolyte, a percentage of the second additive is W4, and 0.01% < W4 < 20%, optionally, 0.05% < W4 < 5%, and further optionally, 0.1% < W4 < 3%.

9. The secondary battery according to any one of claims 1 to 6, wherein A, C, and D are each independently any one element within their respective ranges described above, and B comprises at least two elements within its range; and
optionally,
A is any one element selected from Mg and Nb, and/or
B is at least two elements selected from Fe, Ti, V, Co, and Mg, optionally Fe and more than one element selected from Ti, V, Co, and Mg, and/or
C is S, and/or
D is F.

10. The secondary battery according to any one of claims 1 to 9, wherein
x is selected from a range of 0.001 to 0.005; and/or
y is selected from a range of 0.01 to 0.5, optionally from a range of 0.25 to 0.5; and/or
z is selected from a range of 0.001 to 0.005; and/or
n is selected from a range of 0.001 to 0.005.

11. The secondary battery according to any one of claims 1 to 10, wherein (1-y):y is within a range of 1 to 4, optionally within a range of 1.5 to 3, and a:x is within a range of 9 to 1100, optionally within a range of 190 to 998.

12. The secondary battery according to any one of claims 1 to 11, wherein a lattice change rate of the positive electrode active material is below 8%, optionally below 4%.

13. The secondary battery according to any one of claims 1 to 12, wherein a Li/Mn antisite defect concentration of the positive electrode active material is below 2%, optionally below 0.5%.

14. The secondary battery according to any one of claims 1 to 13, wherein a surface oxygen valence of the positive electrode active material is below -1.82, optionally from -1.89 to -1.98.

15. The secondary battery according to any one of claims 1 to 14, wherein a compacted density under 3T of the positive electrode active material is above 2.0 g/cm³, optionally above 2.2 g/cm'.

16. The secondary battery according to any one of claims 1 to 15, wherein a surface of the positive electrode active material is coated with carbon.

17. A battery module, comprising a secondary battery, wherein the secondary battery is the secondary battery according to any one of claims 1 to 16.

18. A battery pack, comprising a battery module, wherein the battery module is the battery module according to claim 17.

19. An electric apparatus, comprising a secondary battery, a battery module, or a battery pack, wherein the secondary battery is selected from the secondary battery according to any one of claims 1 to 16, the battery module is the battery module according to claim 17, or the battery pack is the battery pack according to claim 18.
